# EUROPEAN PATENT APPLICATION

(11) **EP 2 011 661 A1**
(43) Date of publication of application: **07.01.2009**
(21) Application number: 07740987.8
(22) Date of filing: 04.04.2007
(51) Int. Cl.: B41M 5/26, G11B 7/24, G11B 7/244

(54) **OPTICAL RECORDING MEDIUM, VISIBLE INFORMATION RECORDING METHOD AND USE OF DYE COMPOUND**

(30) Priority: 10.04.2006 JP 2006107828
(71) Applicant: FUJIFILM Corporation, Minato-ku Tokyo 106-8620 (JP)
(72) Inventor: SETO, Nobuo, Minami-Ashigara-shi, Kanagawa 250-0123 (JP); SHIBATA, Michihiro, Odawara-shi, Kanagawa 250-0001 (JP)
(74) Representative: Klunker . Schmitt-Nilson . Hirsch
(86) International application number: PCT/JP2007/057551
(87) International publication number: WO 2007/119672

(57) **Abstract**

There is provided an optical recording medium having, on a substrate, a visible information recording layer including a dye compound represented by Formula (1).

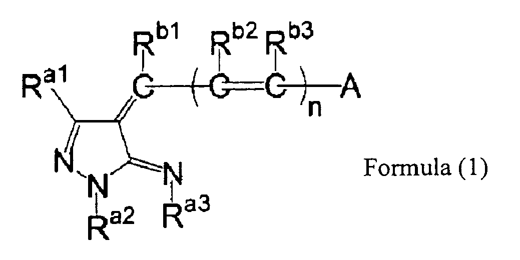

In Formula (1), R^{a1}, R^{a2}, R^{a3}, R^{b1}, R^{b2} and R^{b3} each independently represent a hydrogen atom, or a monovalent substituent (R^{a2} and R^{a3} may bonded to each other to form a 5-membered to 7-membered heterocyclic ring), A represents a substituted or unsubstituted aliphatic group, a substituted or unsubstituted aryl group, a substituted or unsubstituted heterocyclic ring group, and n represents 0, 1, 2 or 3.

## Description

### TECHNICAL FIELD

The present invention relates to an optical recording medium, visible information recording method and method for using a dye compound, more particularly, to an optical recording medium having a visible information recording layer capable of recording visible information with light such as laser beam, visible information recording method, and a method for using a dye compound.

### BACKGROUND ART

It has been known that an optical recording medium such as a CD-R and DVD-R, in which a label, on which visible information for contents of electronic data such as music titles of music data and titles identifying recorded electronic data in a recording layer is printed, is stuck on a surface opposite a recording surface for recording electronic data on a substrate. In such an optical recording medium, the titles or the like are printed on a circular label sheet by a printer or the like, and thereafter, the printed label sheet is stuck on the surface opposite the recording surface of the optical recording medium to manufacture the recording medium.

However, when an optical recording medium, on which a desired visible image such as titles is recorded, is produced, a printer such as an inkjet printer is required in addition to a disk drive. Accordingly, after electronic information has been recorded on a recording surface of the optical recording medium by the disk drive, it is necessary to carry out a troublesome work such that the optical recording medium is taken out of the disk drive, and a label sheet printed by a printer separately prepared as described in the above is stuck on the optical recording medium.

Therefore, an optical recording medium capable of displaying information by changing the contrast between a surface and background on the surface opposite the recording surface, on which information is recorded, by using a laser marker has been proposed (for example, Patent Literature 1). In this constitution, a desired image can be recorded on a label surface of the optical recording medium by means of an optical recording medium drive without providing a printer or the like, additionally. In general, in such an optical recording medium, a recording surface capable of recording electronic information and an image display surface capable of recording and displaying a visual image via a reflection layer are formed. The image display surface is constituted such that a high contrast image can be recorded by using a dye.
Patent Literature 1: Japanese Patent Application Laid-Open (JP-A) No. 11-66617;
Patent Literature 2: Japanese Patent Application Laid-Open (JP-A) No. 2001-342364.

### DISCLOSURE OF INVENTION

### PROBLEMS TO BE SOLVED BY THE INVENTION

However, there is a problem that the dye used in the image display surface tends to color-fade during storage and exposure to light, so that the image contrast is gradually lowered over time, and the visibility cannot be maintained over a long period of time.

The invention was made in view of the above circumstances and provides an optical recording medium which is capable of recording an image with a high contrast and sharpness, and has a superior fastness of recorded image, a method for recording visible image information, and a method of using a dye compound.

### MEANS FOR SOLVING THE PROBLEMS

The concrete means for solving the problems are as follows:
<1> An optical recording medium comprising, on a substrate, a visible information recording layer including a dye compound represented by Formula (1):

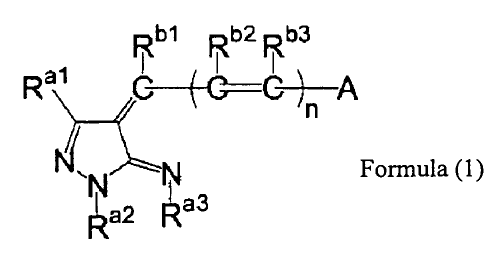

In Formula (1) above, R^{a1}, R^{a2}, R^{a3}, R^{b1}, R^{b2} and R^{b3} each independently represent a hydrogen atom or a monovalent substituent; R^{a2} and R^{a3} may be bonded to each other to form a 5-membered to 7-membered heterocyclic ring; A represents a substituted or unsubstituted aliphatic group, a substituted or unsubstituted aryl group, or a substituted or unsubstituted heterocyclic ring group; n represents 0, 1, 2 or 3; and when n is 2 or more, plural occurrences of R^{b2} may be the same or different and plural occurrences of R^{b3} may be the same or different.

According to the optical recording medium recited in <1> above, the dye compound represented by Formula (1) is used and a visible image can be recorded with a high contrast, and the light fastness of the recorded image can effectively be increased.

<2> The optical recording medium according to claim 1, wherein the dye compound is represented by Formula (2):

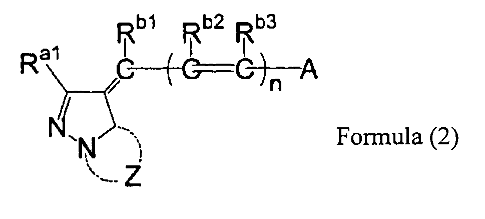

In Formula (2) above, R^{a1}, R^{b1}, R^{b2} and R^{b3} each independently represent a hydrogen atom or a monovalent substituent; A represents a substituted or unsubstituted aliphatic group, a substituted or unsubstituted aryl group, or a substituted or unsubstituted heterocyclic ring group; Z represents a group forming a 5-membered to 7-membered heterocyclic ring together with a nitrogen atom and carbon atom; n represents 0, 1, 2 or 3; and when n is 2 or more, plural occurrences of R^{b2} may be the same or different and plural occurrences of R^{b3} may be the same or different.

<3> The optical recording medium according to claim 1 or 2, wherein the dye compound is represented by Formula (3):

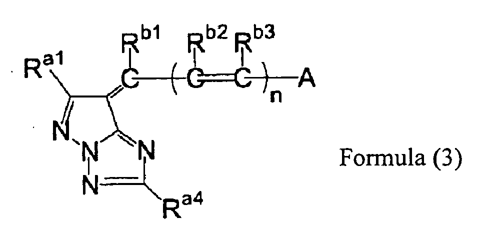

In Formula (3) above, R^{a1}, R^{a4}, R^{b1}, R^{b2} and R^{b3} each independently represent a hydrogen atom or a monovalent substituent; A represents a substituted or unsubstituted aliphatic group, a substituted or unsubstituted aryl group, or a substituted or unsubstituted heterocyclic ring group; n represents 0, 1, 2 or 3; and when n is 2 or more, plural occurrences of R^{b2} may be the same or different and plural occurrences of R^{b3} may be the same or different.

According to the optical recording medium recited in <2> or <3> above, in particular, the optical recording medium is constituted such that the dye compound has a dye structure in which a 5-membered to 7-membered heterocyclic ring is condensed with a pyrazole ring, so that the contrast and light fastness of the recorded image can effectively be increased. Further, the dye structure having a pyrazolotriazole ring represented by Formula (3) is particularly effective.

<4> The optical recording medium according to claim 3, wherein R^{a4} in Formula (3) is an alkyl group or an aryl group.
According to the optical recording medium recited in <4> above, R^{a4} on the pyrazolotriazole ring is an alkyl group or aryl group, and therefore, the contrast and light fastness of recorded image can particularly effectively be increased.

<5> An optical recording medium comprising a visible information recording layer on a substrate, wherein the visible information recording layer is irradiated by a laser beam multiple times on substantially the same track to record visible information, and includes a dye compound represented by Formula (1):

<6> An optical recording medium comprising a visible information recording layer on a disk-shaped substrate, wherein the visible information recording layer is irradiated by a laser beam by oscillating the laser beam multiple times along substantially the same track in a radial direction to record visible information, and includes a dye compound represented by Formula (1):

In the optical recording medium recited in <5> or <6> above, the characteristics required therefor are different from those required for common digital data recording as follows; namely, pits are formed by irradiation with laser beam once in the digital data recording. Accordingly, the characteristics required for the optical recording medium for common digital data recording are different from the characteristics required for the optical recording medium of the invention. In general, when pits are formed in a dye recording layer, it is important to form the pits which can provide a sufficient reflectivity and modulation factor for recognizing the pits by means of a disk drive. Accordingly, as described in the above, the use of the system in which irradiation with laser beam is performed multiple times along substantially same track, or a system in which irradiation with laser beam is performed multiple times along substantially same track by oscillating the beam in the radial direction of the optical disk, is not a usual type of usage. Further, in regular optical disks, the position for forming pits in the radial direction is fixed, and the laser beam can never sway in the radial direction of the optical disk. Furthermore, it is impossible to consider that the laser beam sways in the radial direction of the optical disk for forming pits. Thus, in the system quite different from the conventional drive system, the optical recording medium of the invention is capable of recording an image with a high contrast and sharpness, and providing a superior light fastness of recorded image.

### EFFECTS OF THE INVENTION

The invention provides an optical recording medium and visible information recording method which are capable of recording an image with a high contrast and sharpness, and which provides a recorded image with an excellent light fastness, and method for using a dye compound.

### BRIEF DESCRIPTION OF THE DRAWINGS

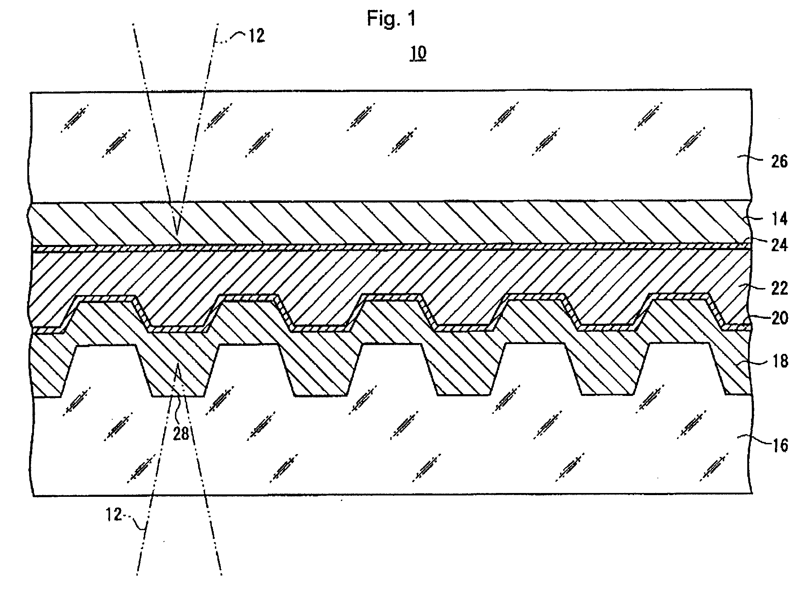

Fig. 1 is a schematic view showing an example of the layer configuration of an optical recording medium according to the invention.

### BEST MODE OF CARRYING OUT THE INVENTION

The optical recording medium according to the invention may be constituted such that the optical recording medium comprises at least one substrate and at least one visible information recording layer provided on the substrate. The optical recording medium according to the invention may preferably further comprise a digital information recording layer for recording invisible electronic information such as music data or the like. Further, the optical recording medium according to the invention may be constituted such that the optical recording medium includes other layers such as a reflection layer for reflecting light when recording, an adhesive layer or the like.

### - Visible Information Recording Layer -

The visible information recording layer is a layer which contains a dye as a main component and is capable of recording visible images (visual information) such as characters, drawings pictures and the like. The visible image means visually recognizable images, which include all of visually recognizable information such as characters (strings), pictures, drawings and the like, for example, the title of a disk, information of contents, thumbnail of contents, related pictures, ornamental pictures, copyright information, recorded date and time, recording method, recording formats, barcodes and the like. Further, "contain as a main component" means that the content of dye is 50% or more (preferably 80 % or more) relative to the total solid content in the visible information recording layer.

The information of characters includes user license identifying information, use period identifying information, use times identifying information, rental information, resolution identifying information, layer designating information, user identifying information, copyright owner information, copyright number information, manufacturer information, manufactured date information, sales date information, sales store or sales person information, use set number information, regional designating information, language designating information, application designating information, product user information, use number information, and the like.

The visible information recording layer of the invention is a layer for recording so as to visually recognize the visible image (visual information) by irradiating the layer with laser light, and contains at least one kind of dye compounds represented by the following Formula (1) (hereinafter may be referred to as "dye according to the invention". Since the dye according to the invention is used, a visible image with a high contrast and sharpness is obtained, and the light fastness of recorded image can effectively be increased.

- Dye compound represented by Formula (1) -

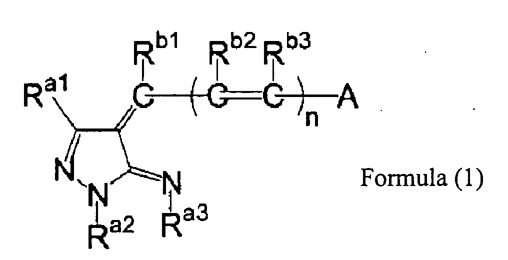

In Formula (1) above, R^{a1}, R^{a2}, R^{a3}, R^{b1}, R^{b2} and R^{b3} each independently represent a hydrogen atom, or a monovalent substituent. The "monovalent substituent group" represented by R^{a1}, R^{a2}, R^{a3}, R^{b1}, R^{b2} or R^{b3} may be an substitutable group. The monovalent substituent group may include, for example, an aliphatic group, an aryl group, a heterocyclic group, an acyl group, an acyloxy group, an acylamino group, an aliphatic oxy group, an aryloxy group, a heterocyclic oxy group, an aliphatic oxycarbonyl group, aryloxycarbonyl group, a heterocyclic oxycarbonyl group, a carbamoyl group, an aliphatic sulfonyl group, an aryl sulfonyl group, a heterocyclic sulfonyl group, an aliphatic sulfonyloxy group, an arylsulfonyloxy group, a heterocyclic sulfonyloxy group, a sulfamoyl group, an aliphatic sulfonamide group, an aryl sulfonamide group, a heterocyclic sulfonamide group, an amino group, an aliphatic amino group, an aryl amino group, a heterocyclic amino group, an aliphatic oxycarbonyl amino group, an aryloxycarbonyl amino group, a heterocyclic oxycarbonyl amino group, an aliphatic sulfinyl group, an aryl sulfinyl group, an aliphatic thio group, an aryl thio group, a hydroxyl group, a cyano group, a sulfo group, a carboxyl group, an aliphatic oxyamino group, an aryl oxyamino group, a carbamoyl amino group, a sulfamoyl amino group, a halogen atom, a sulfamoyl carbamoyl group, a carbamoyl sulfamoyl group, a dialiphatic oxysulfinyl group, a diaryl oxyphosphinyl group, and the like. These substituents may further substituted with other monovalent substituents.

Among the above, in light of the effect of the invention, it is preferable that R^{a1}, R^{a2}, R^{a3}, R^{b1}, R^{b2} and R^{b3} represent a hydrogen atom, an aliphatic group, an aryl group, an acyloxy group, an acylamino group, an aliphatic oxy group, an aliphatic sulfonyloxy group, an aryl sulfonyloxy group, an aliphatic sulfonamide group, an aryl sulfonamide group, an amino group, an aliphatic amino group, an aryl amino group, an aliphatic oxycarbonyl amino group, an aryloxycarbonyl amino group, a heterocyclic oxycarbonyl amino group, a hydroxyl group, a cyano group, a sulfo group, a carbamoyl amino group, or a sulfamoyl amino group, and, it is more preferable that these represent a hydrogen atom, an aliphatic group, an aryl group or an aliphatic oxy group. R^{a2} and R^{a3} may be bonded to each other to form a 5-membered to 7-membered ring structure.

More preferable specific examples are as follows:
R^{a1} is preferably an alkyl group having 1 to 12 carbon atoms. For example, methyl group, ethyl group, i-propyl group, t-butyl group, cyclohexyl group, 2-ethylhexyl group, dodecyl group and the like. In particular, an alkyl group having 1 to 8 carbon atoms is preferable, and an alkyl group having 1 to 4 carbon atoms is more preferable.

R^{a2} is preferably an aliphatic group or an aryl group, and R^{a3} is preferably a hydrogen atom or an aliphatic group, more preferably a hydrogen atom. Particularly preferably, R^{a2} and R^{a3} are bonded to each other to form a ring structure. The ring structure when a ring is formed is preferably 5-membered to 7-membered ring, and more preferably 5-membered ring.

R^{b1}, R^{b2} and R^{b3} are preferably a hydrogen atom or an aliphatic group, and particularly preferable a hydrogen atom.

In Formula (1), A represents a substituted or unsubstituted aliphatic group, a substituted or unsubstituted aryl group, a substituted or unsubstituted heterocyclic group. When A has a substituent, the substituents similar to the substituent listed for the "monovalent substituent" represented by R^{a1}- R^{a3} and R^{b1}- R^{b3} may be exemplified. Preferred examples thereof include a heterocyclic group, an acyl group, an acyloxy group, an acylamino group, an aliphatic oxy group, an aryloxy group, a heterocyclic oxy group, an aliphatic oxycarbonyl group, aryloxycarbonyl group, a heterocyclic oxycarbonyl group, a carbamoyl group, an aliphatic sulfonyl group, an aryl sulfonyl group, a heterocyclic sulfonyl group, an aliphatic sulfonyloxy group, an arylsulfonyloxy group, a heterocyclic sulfonyloxy group, a sulfamoyl group, an aliphatic sulfonamide group, an aryl sulfonamide group, a heterocyclic sulfonamide group, an aliphatic oxycarbonyl amino group, an aryloxycarbonyl amino group, a heterocyclic oxycarbonyl amino group, an aliphatic sulfinyl group, an aryl sulfinyl group, a hydroxyl group, a cyano group, a carboxyl group, a sulfamoyl amino group, a halogen atom, a sulfamoyl carbamoyl group, a carbamoyl sulfamoyl group and the like.

As an unsbstituted aliphatic group, for example, an alkyl group having 1 to 20 carbon atoms in total, an alkenyl group having 2 to 20 carbon atoms in total and an alkynyl group having 2 to 20 carbon atoms in total are preferably exemplified. In particular, an alkyl group having 1 to 15 carbon atoms in total is preferable, and an alkyl group having 1 to 10 carbon atoms in total is particularly preferable.
As a sbstituted aliphatic group, for example, a substituted alkyl group having 2 to 20 carbon atoms in total, a substituted alkenyl group having 3 to 20 carbon atoms in total and a substituted aralkyl group having 7 to 20 carbon atoms in total are preferably exemplified. Among them, a substituted alkyl group having 2 to 15 carbon atoms in total is preferable, and a substituted alkyl group having 2 to 10 carbon atoms in total is particularly preferable.

An aryl group represented by A may be unsubstituted or substituted, or ring-condensed. For example, phenyl group, 4-methoxy phenyl group, 4-dimethylamino group and the like are exemplified. In particular, an aryl group having 6 to 30 carbon atoms in total is preferable, an aryl group having 6 to 20 carbon atoms in total is more preferable, an aryl group having 6 to 15 carbon atoms in total is further preferable, and an aryl group having 6 to 12 carbon atoms in total is most preferable.

A heterocyclic group represented by A may be unsubstituted or substituted, or ring-condensed. A 5-membered to 7-membered substituted or unsubstituted heterocyclic group having 2 to 30 carbon atoms in total is preferred. Among them, A is preferably heterocycles referred to as acidic nuclei in the technical area of cyanine dyes and oxonole dyes. The acidic nuclei are described in "The theory of the Photographic Process", edited by James, 4th Edition, pp.198, published by McMillan Co., 1977. More specifically, pyrazole-5-one, prazolidine-3,5-dione, imidazoline-5-one, hydantoin, 2 or 4-thiohydantoin, 2-iminooxazolidine-4-one, 2-oxazoline-5-one, 2-thiooxazoline-2,4-dione, isorhodanine, rhodanine, thiophene-3-one, thiophene-3-one-1,1-dioxide, indoline-2-one, indoline-3-one, 2-oxoindazolium, 5,7-dioxo-6,7-dihydrothiazolo[3,2-a]pyrimidine, 3,4-dihydroisoquinoline-4-one, 1,3-dioxane-4,6-dione (for example, Meldrum's acid or the like), barbituric acid, 2-thiobarbituric acid, coumarin-2,4-dione, indazoline-2-one, pyrido[1,2-a]pyrimidine-1,3-dione, pyrazolo[1,5-b]quinazolone, pyrazolopyridone, nuclei such as 5-membered or 6-membered carbon rings (for example, hexane-1,3-dione, pentane-1,3-dione, indane-1,3-dione, or the like), each of which may be substituted, are exemplified. Pyrazole-5-one, barbituric acid, 2-thiobarbituric acid, 1,3-dioxane-4,6-dione are preferred. Further, moieties of compounds referred to as color couples in the area of the silver salt photographic technology are preferred.
For example, pyrazolones, 1H-imidazo[1,2-b]pyrazoles, 1H-pyrazolo[5-1-c][1,2,4]triazoles, 1H-pyrazolo[1,5-b][1,2,4]triazoles and the like are exemplified.
In particular, as A, 5-membered or 7-membered heterocyclic groups having 2 to 20 carbon atoms in total are more preferable.

Among the groups in the above, A is preferably a group represented by the following formulae (A-1) to (A14).

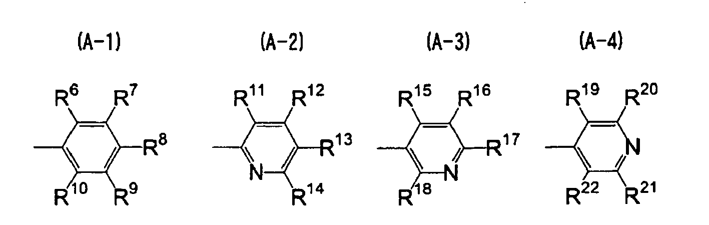

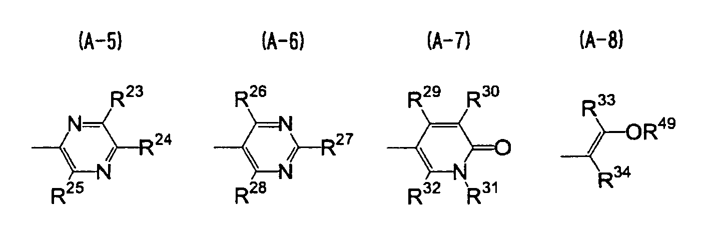

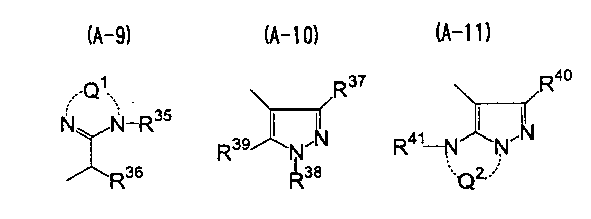

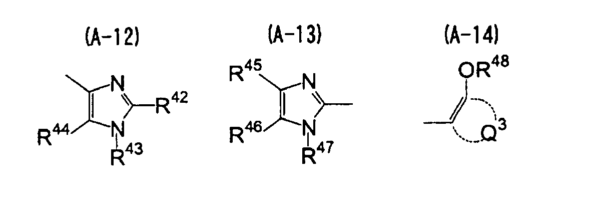

In the above (A-1) to (A14), R⁶ to R⁴⁹ each independently represent a hydrogen atom or a substituent. Here, the substituent is the group recited in the paragraph "monovalent substituent" as described in the above, and may be any substitutable group. Preferred substituents include an aliphatic group, an aryl group, a heterocyclic group, an acyl group, an acylamino group, an aliphatic oxy group, an aliphatic oxycarbonyl group, a carbamoyl group, a sulfamoyl group, an aliphatic sulfonamide group, an aryl sulfonamide group, an amino group, an aliphatic amino group, a hydroxyl group, a cyano group, a sulfo group and a carboxyl group.

Adjacent two groups in R⁶ to R¹⁴, R¹⁵ to R¹⁷, R⁴² to R⁴⁷, and R¹⁹ and R²⁰, R²¹ and R²², R²³ and R²⁴, R²⁹ and R³⁰, R³¹ and R³², and R³⁵ and R³⁶ may be bonded to each other insofar as they can be bonded to each other to form a 5-membered to 7 membered hydrocarbon ring or heterocyclic ring.

In addition, Q¹ in (A-9), Q² in (A-11) and Q³ in (A-14) each represent a non-metal atomic group necessary for forming a 5-membered to 7-membered ring.

Among the above groups, in view of the effect of the invention, A preferably represents (A-10), (A-11) or (A-14), and particularly preferably represents (A-11).

(A1-1 to A14-25) which are specific examples of A are shown below, but the invention is not limited to these examples:

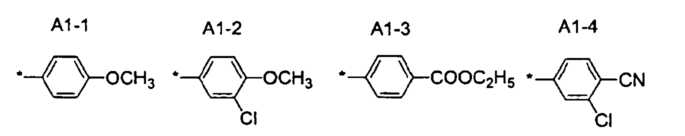

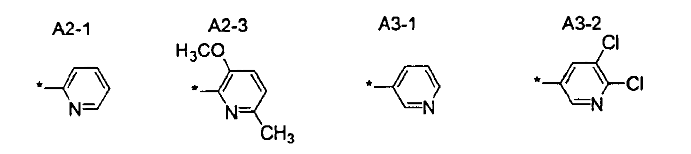

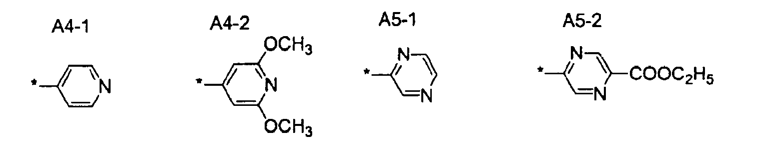

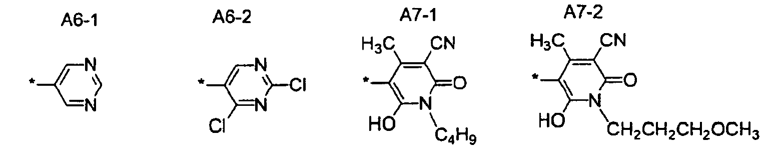

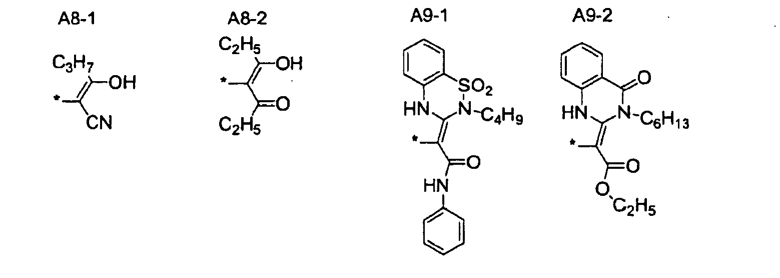

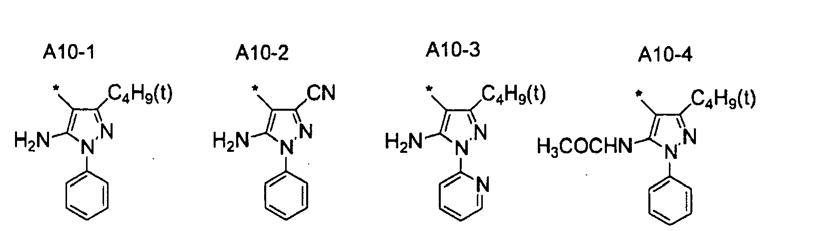

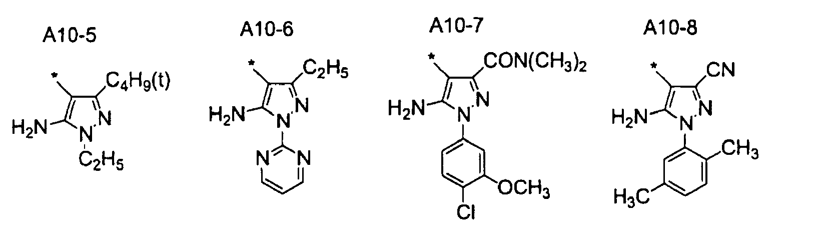

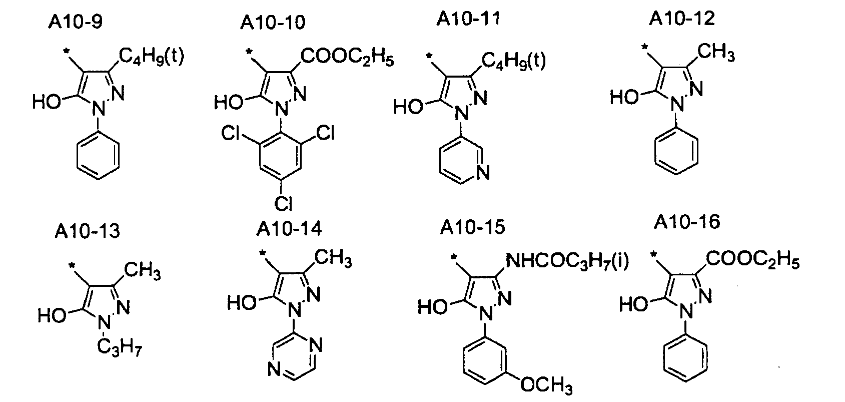

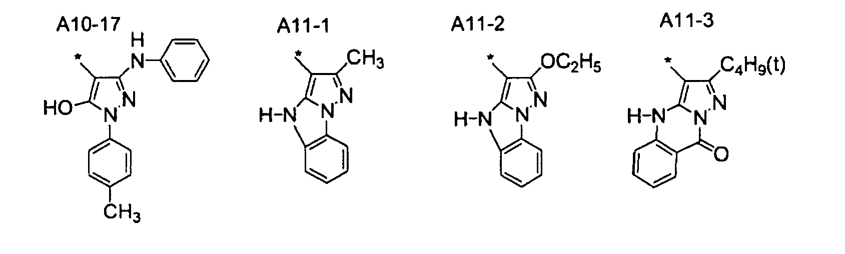

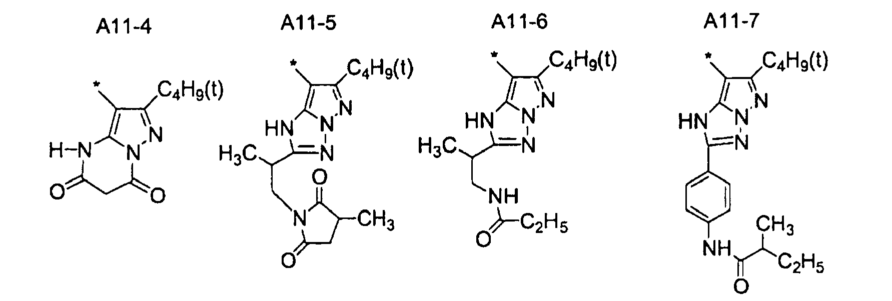

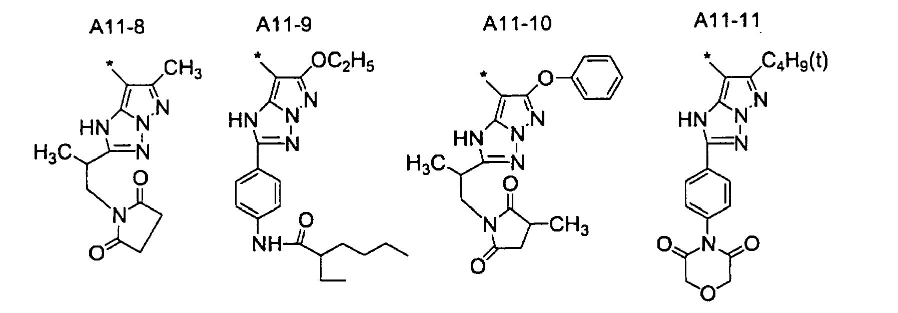

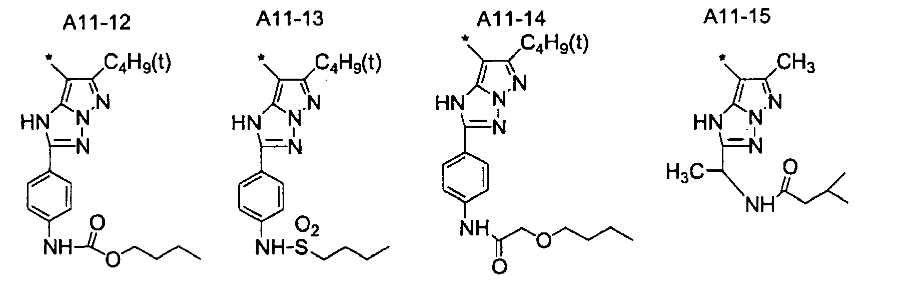

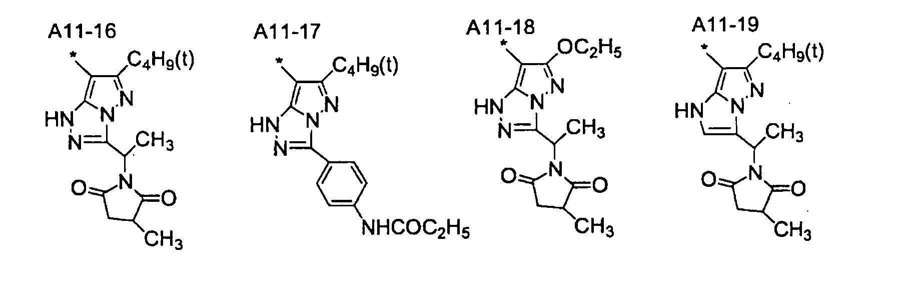

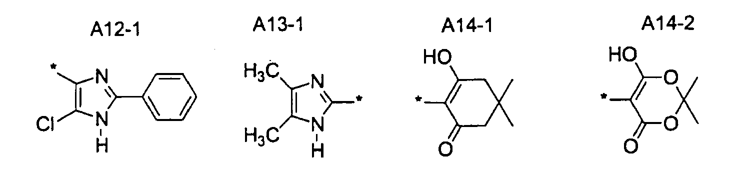

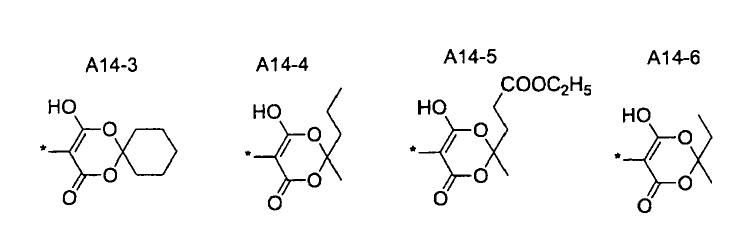

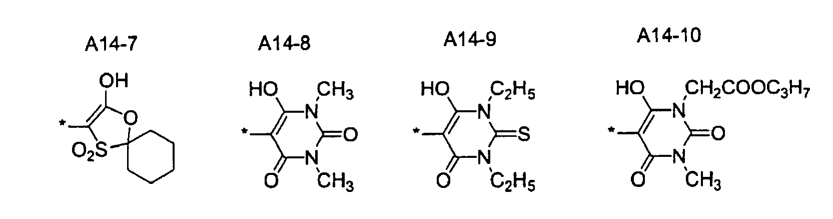

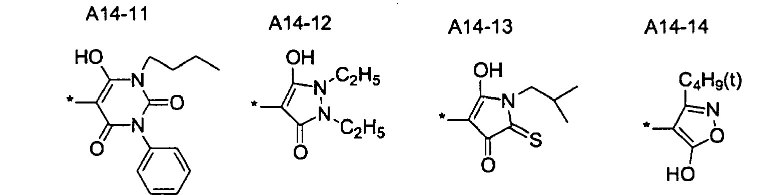

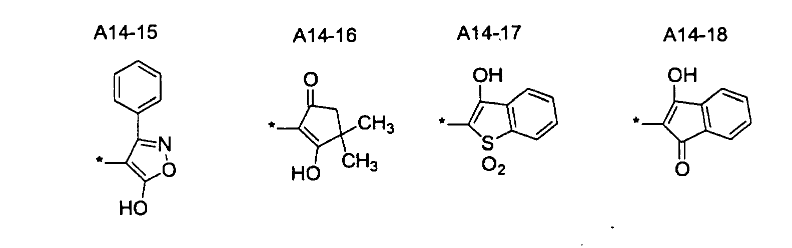

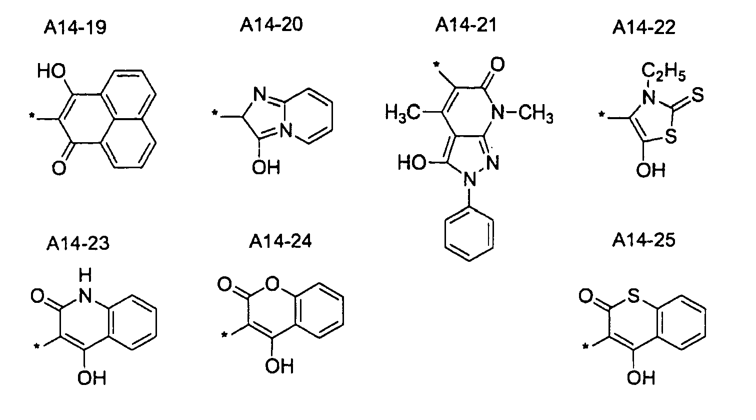

In Formula (1), n represents 0, 1, 2 or 3. When n is 2 or more, plural occurrences of R^{b2} may be the same or different and plural occurrences of R^{b3} may be the same or different. In light of fastness, n is preferably0, 1 or 2, and more preferably 0 or 1.

In Formula (1), specific examples (B10-1 to B10-8) of groups which have a pyrazoline ring as a basic structure to which R^{a1} is bonded are shown. However, the invention is not limited to these examples.

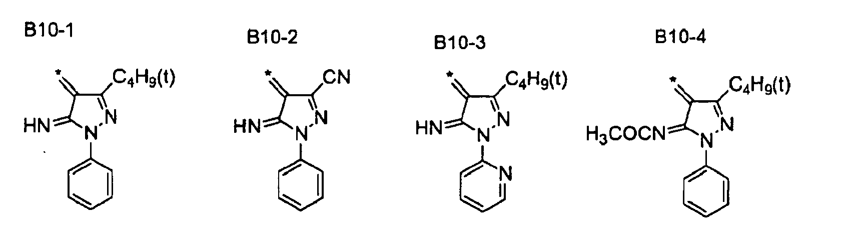

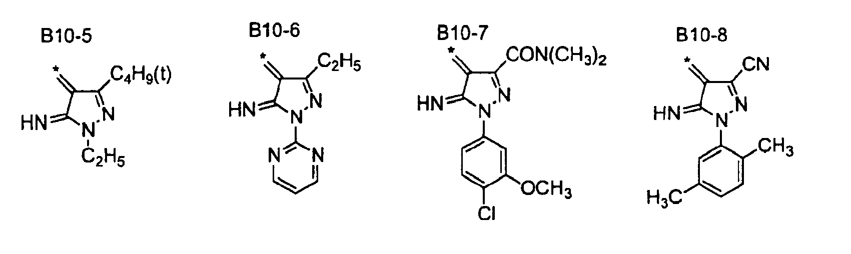

In Formula (1), it is particularly preferable that R^{a1} is an alkyl group having 1 to 4 carbon atoms, R^{a2} and R^{a3} are bonded to each other to form a 5-membered to 7-membered ring, R^{b1} is a hydrogen atom, R^{b2} is a hydrogen atom, R^{b3} is a hydrogen atom, A is (A-10), (A-11) or (A-14), and n is 0 or 1.

The dye compound represented by Formula (1) may have either a symmetrical skeleton structure or asymmetrical skeleton structure with respect to a methine group at the center of the dye, but an azole ring represented by A has the same azole skeleton structure as the azole ring (pyrazoline ring) to which R^{a1} is bonded, is preferred in light of fastness.

### - Dye Compound represented by Formula (2) -

Among the dye compounds represented by Formula (1), the dye compounds represented by Formula (2) below are more preferable.

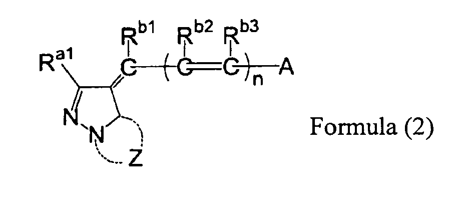

In Formula (2), R^{a1}, R^{b1}, R^{b2} and R^{b3} each independently represent a hydrogen atom, or a monovalent substituent. A represents a substituted or unsubstituted aliphatic group, a substituted or unsubstituted aryl group, or a substituted or unsubstituted heterocyclic ring group. n represents 0, 1, 2 or 3. When n is 2 or more, plural occurrences of R^{b2} may be the same or different and plural occurrences of R^{b3} may be the same or different. Here, in Formula (2), R^{a1}, R^{b1}, R^{b2} and R^{b3}, A and n are the same as R^{a1}, R^{b1}, R^{b2} and R^{b3}, A and n in Formula (1) as described above, and preferred embodiments thereof are the same as those.

In Formula (2), Z represents a group forming a 5-membered to 7-membered heterocyclic ring together with a nitrogen atom or carbon atom.

"The 5-membered to 7-membered heterocyclic ring" is a heterocyclic ring formed by a nitrogen atom and carbon atom which constitute the 2-pyrazoline ring represented by Formula (2), and Z. For example, a 5-membered ring such as 1, 2, 4-triazole ring and imidazole ring, a 6-membered ring such as triazine ring, pyrimidine ring and 1, 3-diazacyclohexane ring, and a 7-membered ring such as 1,3-diazacycloheptane are preferable, and 1, 2, 4-triazole ring is more preferable.

"The 5-membered to 7-membered heterocyclic ring" may be unsubstituted or substituted. When substituted, the ring may be substituted with substituents similar to those enumerated in the paragraph of "monovalent substituent" represented by R^{a1} to R^{a3} or the like in Formula (1).

Hereinafter, in Formula (2), specific examples (B11-1 - B11-19) of the groups which have a 5-membered to 7-membered heterocyclic ring including 2-pyrazoline ring, to which R^{a1} is bonded, and Z, as a basic structure are enumerated. However, the invention is not limited to these examples.

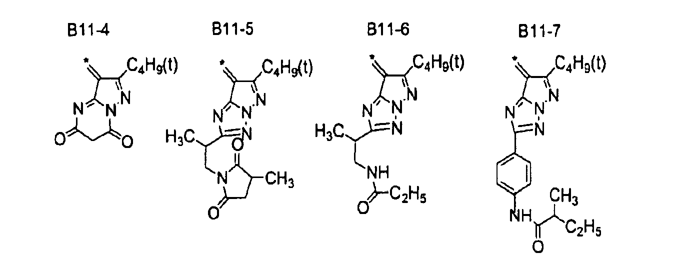

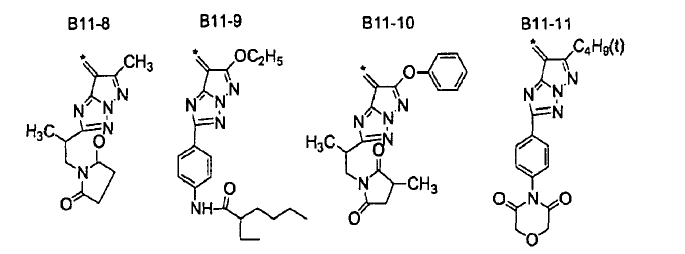

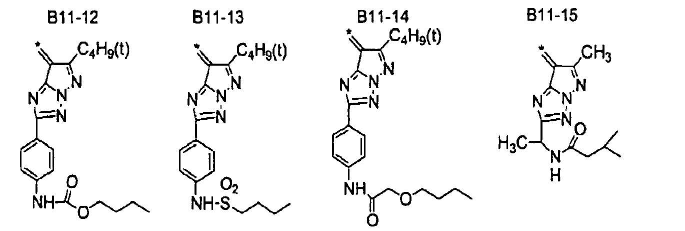

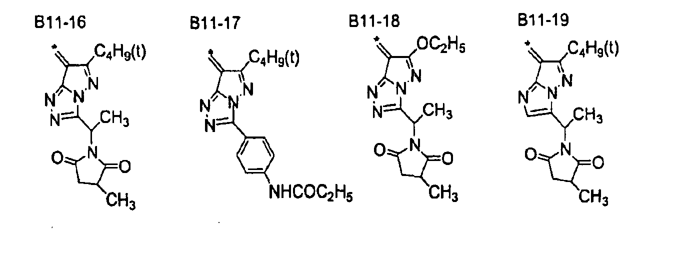

Further, in the dye compounds represented by Formula (2), embodiments in which R^{a1} is an alkyl group having 1 to 8 carbon atoms, the hererocyclic ring formed together with Z, a nitrogen atom and carbon atom is a 5-membered ring, R^{b1}, R^{b2} and R^{b3} are a hydrogen atom, and n is 0 or 1 are preferable, in particular, embodiments in which R ^{a1} is an alkyl group having 1 to 4 carbon atoms, the hererocyclic ring formed together with Z, a nitrogen atom and carbon atom is 1,2,4-triazole ring, R^{b1}, R^{b2} and R^{b3} are hydrogen atoms, and n is 0 or 1, are more preferable
Furthermore, in light of improving fastness, it is particularly preferable that in the dye compound represented by Formula (2), the azole ring represented by A has the same azole skeleton structure as the azole ring (pyrazoline ring) to which R^{a1} is bonded.

### - Dye Compound represented by Formula (3)

Among the dye compounds represented by Formula (2), the dye compounds represented by Formula (3) below are most preferable.

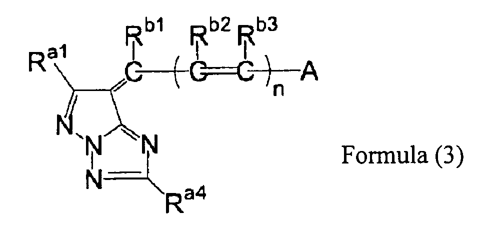

In Formula (3), R^{a1}, R^{a4}, R^{b1}, R^{b2} and R^{b3} each independently represent a hydrogen atom, or a monovalent substituent. A represents a substituted or unsubstituted aliphatic group, a substituted or unsubstituted aryl group, or a substituted or unsubstituted heterocyclic ring group. n represents 0, 1, 2 or 3. When n is 2 or more, plural occurrences of R^{b2} may be the same or different and plural occurrences of R^{b3} may be the same or different. Here, in Formula (3), R^{a1}, R^{b1}, R^{b2} and R^{b3}, A and n are the same as R^{a1}, R^{b1}, R^{b2} and R^{b3}, A and n in Formula (1) as described above, and preferred embodiments thereof are the same as those.

In Formula (3), R^{a4} represents a hydrogen atom, or a monovalent substituent. The monovalent substituents represented by R^{a4} may be any substitutable groups, and substituents similar to those enumerated in the paragraphs of "monovalent substituent" represented by R^{a1} to R^{a3} and R^{b1} to R^{b3} as described above can be enumerated.
The substituents may be unsubstituted, or further substituted with substituents enumerated in the paragraph of "monovalent substituent" represented by R^{a1} to R^{a3} or the like in Formula (1), preferably with an aliphatic group, aryl group, or heterocyclic group, more preferably, an alkyl group or aryl group.

The aliphatic groups represented by R^{a4} may be unsubstituted or substituted, and include an alkyl group, alkenyl group and the like.
The unsubstituted or substituted alkyl group is preferably an alkyl group having 1 to 25 carbon atoms, for example, i-propyl group, 2-methyl-2-acetylaminoehyl group, 2-propanoyl aminopropyl group and the like are exemplified. In particular, an alkyl group having 2 to 25 carbon atoms is preferable, and an alkyl group having 2 to 20 carbon atoms is particularly preferable.

The aryl groups represented by R^{a4} may be unsubstituted or substituted, and are preferably an aryl group having 6 to 30 carbon atoms, and more preferably an aryl group having 6 to 20 carbon atoms, and for example, 4-butanoyl aminophenyl group, 4-butane sulfonamide phenyl group, 4-nitrophenyl group and the like are preferably exemplified.

The heterocyclic group represented by R^{a4} may be unsubstituted or substituted, and for example, 5-pyrimidil group and the like are preferably exemplified.

Further, in the dye compounds represented by Formula (3), embodiments in which R^{a1} is an alkyl group having 1 to 8 carbon atoms, R^{a4} is an alkyl group, or aryl group, R^{b1} is a hydrogen atom, R^{b2} is a hydrogen atom, R^{b3} is a hydrogen atom, and n is 0 or 1 are preferable, and, in particular, embodiments in which R^{a1} is an alkyl group having 1 to 4 carbon atoms, R^{a4} is an alkyl group having 1 to 20 carbon atoms, or an aryl group having 6 to 20 carbon atoms, R^{b1}, R^{b2} and R^{b3} are hydrogen atoms, and n is 0 or 1, are more preferable
Furthermore, in light of improving fastness, it is particularly preferable that in the dye compound represented by Formula (3), the azole ring represented by A has the same azole skeleton structure as the azole ring (pyrazoline ring) to which R^{a1} is bonded.

In the dye compounds represented by Formulae (1) to (3), when the dye compound contains an anion (when a proton is released from A), a cation which forms a pair therewith (counter ion) is preferably the cationic part in the compounds represented by the Formula (I), (II) or (III) as described in Japanese Patent Application Laid-Open (JP-A) No. 10-109475.

Hereinafter, specific examples of the dye compounds (exemplary compounds M-1 - M-52, T-1 - T-52, P-1 - P-52, and H-1 - H30) represented by Formulae (1) - (3) are shown. However, the invention is not limited thereto.
The numbers listed in the columns of the structural formula A and the structural formula B in the exemplary compounds show respectively, the number of the specific examples represented by A as described above, and the number of the specific examples of the groups which have a 5-membered to 7-membered heterocyclic ring having a pyrazole ring or 2-pyrazoline ring, which R^{a1} is bonded, and Z, as a basic structure.

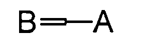

| Exemplary Compound | Structural Formula B | Structural Formula A | | Exemplary Compound | Structural Formula B | Structural Formula A |
|---|---|---|---|---|---|---|
| M - 1 | B10 - 1 | A11 - 7 | | M - 2 | B10 - 2 | A11 - 7 |
| M - 3 | B10 - 7 | A11 - 7 | | M - 4 | B11 - 1 | A11 - 7 |
| M - 5 | B11 - 3 | A11 - 7 | | M - 6 | B11 - 5 | A11 - 7 |
| M - 7 | B11 - 6 | A11 - 7 | | M - 8 | B11 - 7 | A11 - 7 |
| M - 9 | B11 - 8 | A11 - 7 | | M - 10 | B11 - 15 | A11 - 7 |
| M - 11 | B11 - 7 | A1 - 1 | | M - 12 | B11 - 7 | A2 - 3 |
| M - 13 | B11 - 7 | A3 - 1 | | M - 14 | B11 - 7 | A4 - 2 |
| M - 15 | B11 - 7 | A5 - 2 | | M - 16 | B11 - 7 | A6 - 1 |
| M - 17 | B11 - 7 | A7 - 1 | | M - 18 | B11 - 7 | A8 - 2 |
| M - 19 | B11 - 7 | A9 - 1 | | M - 20 | B11 - 7 | A10 - 2 |
| M - 21 | B11 - 7 | A10 - 9 | | M - 22 | B11 - 7 | A10 - 10 |
| M - 23 | B11 - 7 | A10 - 12 | | M - 24 | B11 - 7 | A11 - 1 |
| M - 25 | B11 - 7 | A11 - 8 | | M - 26 | B11 - 7 | A11 - 11 |
| M - 27 | B11 - 7 | A11 - 15 | | M - 28 | B11 - 7 | A14 - 3 |
| M - 29 | B11 - 7 | A14 - 7 | | M - 30 | B11 - 7 | A14 - 8 |
| M - 31 | B11 - 7 | A14 - 9 | | M - 32 | B11 - 7 | A14 - 12 |
| M - 33 | B11 - 7 | A14 - 14 | | M - 34 | B11 - 7 | A14 - 21 |
| M - 35 | B11 - 5 | A10 - 9 | | M - 36 | B11 - 5 | A10 - 10 |
| M - 37 | B11 - 5 | A10 - 12 | | M - 38 | B11 - 5 | A10 - 15 |
| M - 39 | B11 - 5 | A11 - 3 | | M - 40 | B11 - 5 | A11 - 5 |
| M - 41 | B11 - 5 | A14 - 4 | | M - 42 | B11 - 5 | A14 - 9 |
| M - 43 | B11 - 5 | A14 - 10 | | M - 44 | B11 - 5 | A14 - 21 |
| M - 45 | B10 - 2 | A10 - 2 | | M - 46 | B11 - 8 | A11 - 8 |
| M - 47 | B11 - 12 | A11 - 12 | | M - 48 | B11 - 6 | A11 - 6 |
| M - 49 | B11 - 10 | A11 - 10 | | M - 50 | B11 - 11 | A11 - 11 |
| M - 51 | B11 - 15 | A11 - 15 | | M - 52 | B11 - 13 | A11 - 13 |

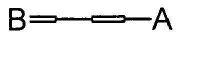

| Exemplary Compound | Structural Formula B | Structural Formula A | | Exemplary Compound | Structural Formula B | Structural Formula A |
|---|---|---|---|---|---|---|
| T - 1 | B10 - 1 | A11 - 7 | | T - 2 | B10 - 2 | A11 - 7 |
| T - 3 | B10 - 7 | A11 - 7 | | T - 4 | B11 - 1 | A11 - 7 |
| T - 5 | B11 - 3 | A11 - 7 | | T - 6 | B11 - 5 | A11 - 7 |
| T - 7 | B11 - 6 | A11 - 7 | | T - 8 | B11 - 7 | A11 - 7 |
| T - 9 | B11 - 8 | A11 - 7 | | T - 10 | B11 - 15 | A11 - 7 |
| T - 11 | B11 - 7 | A1 - 1 | | T - 12 | B11 - 7 | A2 - 3 |
| T - 13 | B11 - 7 | A3 - 1 | | T - 14 | B11 - 7 | A4 - 2 |
| T - 15 | B11 - 7 | A5 - 2 | | T - 16 | B11 - 7 | A6 - 1 |
| T - 17 | B11 - 7 | A7 - 1 | | T - 18 | B11 - 7 | A8 - 2 |
| T - 19 | B11 - 7 | A9 - 1 | | T - 20 | B11 - 7 | A10 - 2 |
| T - 21 | B11 - 7 | A10 - 9 | | T - 22 | B11 - 7 | A10 - 10 |
| T - 23 | B11 - 7 | A10 - 12 | | T - 24 | B11 - 7 | A11 - 1 |
| T - 25 | B11 - 7 | A11 - 8 | | T - 26 | B11 - 7 | A11 - 11 |
| T - 27 | B11 - 7 | A11 - 15 | | T - 28 | B11 - 7 | A14 - 3 |
| T - 29 | B11 - 7 | A14 - 7 | | T - 30 | B11 - 7 | A14 - 8 |
| T - 31 | B11 - 7 | A14 - 9 | | T - 32 | B11 - 7 | A14 - 12 |
| T - 33 | B11 - 7 | A14 - 14 | | T - 34 | B11 - 7 | A14 - 21 |
| T - 35 | B11 - 5 | A10 - 9 | | T - 36 | B11 - 5 | A10 - 10 |
| T - 37 | B11 - 5 | A10 - 12 | | T - 38 | B11 - 5 | A10 - 15 |
| T - 39 | B11 - 5 | A11 - 3 | | T - 40 | B11 - 5 | A11 - 5 |
| T - 41 | B11 - 5 | A14 - 4 | | T - 42 | B11 - 5 | A14 - 9 |
| T - 43 | B11 - 5 | A14 - 11 | | T - 44 | B11 - 5 | A14 - 21 |
| T - 45 | B10 - 2 | A10 - 2 | | T - 46 | B11 - 8 | A11 - 8 |
| T - 47 | B11 - 12 | A11 - 12 | | T - 48 | B11 - 6 | A11 - 6 |
| T - 49 | B11 - 10 | A11 - 10 | | T - 50 | B11 - 11 | A11 - 11 |
| T - 51 | B11 - 15 | A11 - 15 | | T - 52 | B11 - 13 | A11 - 13 |

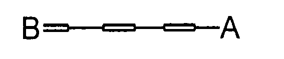

| Exemplary Compound | Structural Formula B | Structural Formula A | | Exemplary Compound | Structural Formula B | Structural Formula A |
|---|---|---|---|---|---|---|
| P - 1 | B10 - 1 | A11 - 7 | | P - 2 | B10 - 2 | A11 - 7 |
| P - 3 | B10 - 7 | A11 - 7 | | P - 4 | B11 - 1 | A11 - 7 |
| P - 5 | B11 - 3 | A11 - 7 | | P - 6 | B11 - 5 | A11 - 7 |
| P - 7 | B11 - 6 | A11 - 7 | | P - 8 | B11 - 7 | A11 - 7 |
| P - 9 | B11 - 8 | A11 - 7 | | P - 10 | B11 - 15 | A11 - 7 |
| P - 11 | B11 - 7 | A1 - 1 | | P - 12 | B11 - 7 | A2 - 3 |
| P - 13 | B11 - 7 | A3 - 1 | | P - 14 | B11 - 7 | A4 - 2 |
| P - 15 | B11 - 7 | A5 - 2 | | P - 16 | B11 - 7 | A6 - 1 |
| P - 17 | B11 - 7 | A7 - 1 | | P - 18 | B11 - 7 | A8 - 2 |
| P - 19 | B11 - 7 | A9 - 1 | | P - 20 | B11 - 7 | A10 - 2 |
| P - 21 | B11 - 7 | A10 - 9 | | P - 22 | B11 - 7 | A10 - 10 |
| P - 23 | B11 - 7 | A10 - 12 | | P - 24 | B11 - 7 | A11 - 1 |
| P - 25 | B11 - 7 | A11 - 8 | | P - 26 | B11 - 7 | A11 - 11 |
| P - 27 | B11 - 7 | A11 - 15 | | P - 28 | B11 - 7 | A14 - 3 |
| P - 29 | B11 - 7 | A14 - 7 | | P - 30 | B11 - 7 | A14 - 8 |
| P - 31 | B11 - 7 | A14 - 9 | | P - 32 | B11 - 7 | A14 - 12 |
| P - 33 | B11 - 7 | A14 - 14 | | P - 34 | B11 - 7 | A14 - 21 |
| P - 35 | B11 - 5 | A10 - 9 | | P - 36 | B11 - 5 | A10 - 10 |
| P - 37 | B11 - 5 | A10 - 12 | | P - 38 | B11 - 5 | A10 - 15 |
| P - 39 | B11 - 5 | A11 - 3 | | P - 40 | B11 - 5 | A11 - 5 |
| P - 41 | B11 - 5 | A14 - 4 | | P - 42 | B11 - 5 | A14 - 9 |
| P - 43 | B11 - 5 | A14 - 11 | | P - 44 | B11 - 5 | A14 - 21 |
| P - 45 | B10 - 2 | A10 - 2 | | P - 46 | B11 - 8 | A11 - 8 |
| P - 47 | B11 - 12 | A11 - 12 | | P - 48 | B11 - 6 | A11 - 6 |
| P - 49 | B11 - 10 | A11 - 10 | | P - 50 | B11 - 11 | A11 - 11 |
| P - 51 | B11 - 15 | A11 - 15 | | P - 52 | B11 - 13 | B11 - 13 |

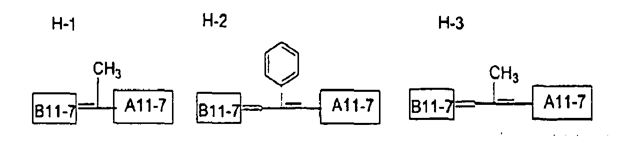

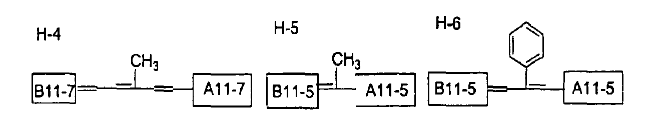

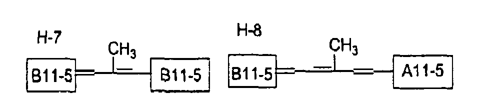

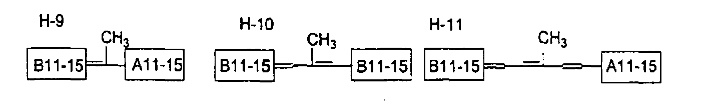

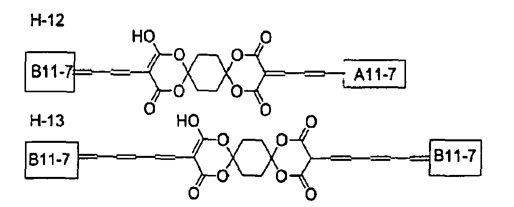

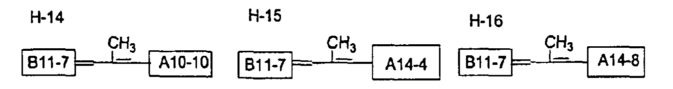

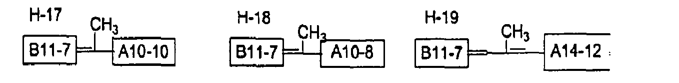

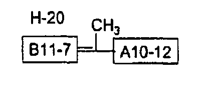

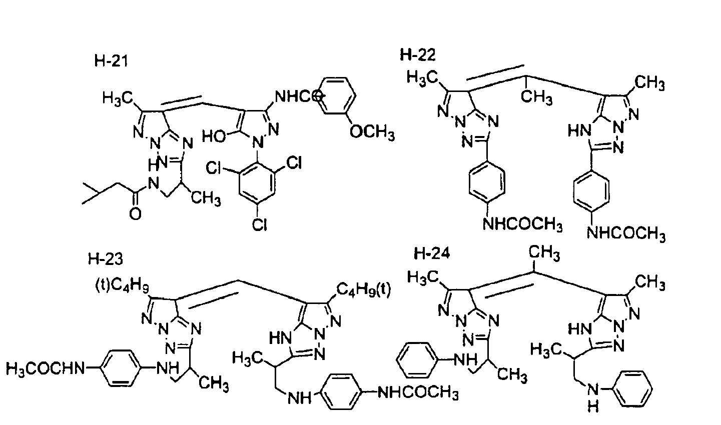

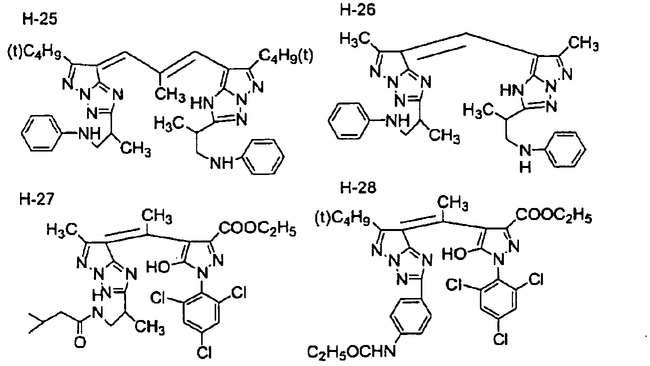

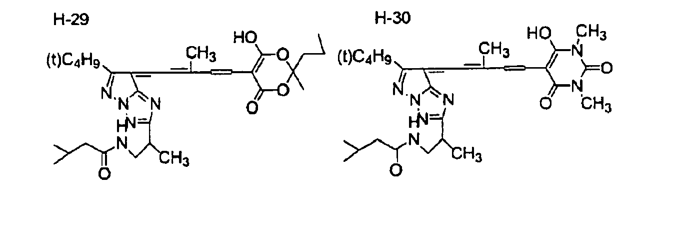

The synthesis of the dye compounds represented by the Formulae (1) - (3) can be conducted by a method similar to that of Patent No. 3707759.

The content of the dye compounds represented by the Formulae (1) - (3) (dye according to the invention) in the visible information recording layer is preferably 5 to 100% by mass relative to the total solid content in the recording layer. The content of the dye according to the invention in the above range is effective in view of recording an image with high contrast and enhancing light fastness of a recorded image.

In the visible information recording layer of the invention, in light of increasing and controlling the contrast of a recorded image, other dyes such as a cyanine dye, phthalocyanine dye, an azo dye, an azo metal complex, an oxonol dye and a leuco type dye may be used in combination with the dye according to the invention.

In addition to the above, a binder and various kinds of additives such as an anti-fading agent, an ultraviolet absorber, a plasticizer, a lubricant and the like can be contained in the visible information recording layer, in accordance with the intended use.

Examples of the binder, as the same as the above, include natural organic polymer substances such as gelatin, cellulose derivatives, dextran, rosin, rubber and the like, synthetic organic polymers such as hydrocarbon type resins such as polyethylene, polypropylene, polystyrene, polyisobutylene and the like; vinyl type resin such as polyvinyl chloride, polyvinylidene chloride, polyvinyl chloride/polyvinyl acetate copolymer and the like; acrylic resins such as polymethyl acrylate, polymethyl methacrylate and the like; polyvinyl alcohol, chlorinated polyethylene, epoxy resin, butylal resins, rubber derivatives, initial condnsates of thermosetting resins such as phenol/formaldehyde resin, and the like.

When a binder is contained, in general, the amount of the binder is preferably in the range of from 0.01 to 50 times, and more preferably in the range of from 0.1 to 5 times the total amount of a dye.

For the purpose of enhancing the light fastness, various kinds of ant-fading agents may be contained. A singlet oxygen quencher is generally used as the anti-fading agent. The singlet oxygen quencher may suitably be selected from known materials, and examples thereof include those described in JP-A Nos. 58-175693, 59-31194, 60-18387, 60-19586, 60-19587, 60-305054, 60-36190, 60-36191, 60-44554, 60-44555, 60-44389, 60-44390, 60-54892, 60-47069, 68-209995, 4-25492, Japanese Patent Publication (JP-B) Nos. 1-38680, 6-26028, German Patent No. 350399, and the Journal of the Chemical Society of Japan, pp. 1141, 1992 (10).

An amount of the anti-fading agent as the singlet oxygen quencher is generally in the range of 0.1% by mass to 100% by mass, preferably in the range of 0.5% by mass to 75% by mass, more preferably in the range of 3% by mass to 50% by mass, most preferably in the range of 5% by mass to 50% by mass relative to the total amount of the dye.

The visible information recording layer can be formed by coating a coating liquid prepared by dissolving the dye according to the invention, and if necessary, other dyes and various kinds of additives (antioxidants, ultraviolet absorbers, plasticizers, lubricants and the like) in a solvent.

Examples of the solvent for the preparation include esters such as butyl acetate, ethyl lactate and cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethyformamide; hydrocarbons such as methycyclohexane; ethers such as dibutyl ether, diethyl ether, tetrahydrofuran, dioxane; alcohols such as ethanol, n-propanol, isopropanol, n-buthanol and diacetone alcohol; fluorinated solvents such as 2,2,3,3-tetrafluoropropanol; and glycol ethers such as ethylene glycol monomethyl ether, ethylene glycol monoethyl ether and propylene glycol monomethyl ether.
The solvent may be used by itself or in a combination of two or more thereof, in view of the solubility of the dye used.

Coating can be carried out by known coating methods such as a spray method, a spin coating method, a dip method, a roll coat method, a blade coat method, a doctor roll method and a screen printing method.

The thickness of the visible information recording layer is preferably 0.01 to 50 µm, more preferably 0.02 to 20 µm, and further more preferably 0.03 to 5 µm. The visible information recording layer may be either a single layer or multi-layers.

The dye according to the invention represented by Formula (1), as described hereinafter, is effective for the use of materials for forming the visible information recording layer in which visible information is recorded by irradiating the layer with laser beam which sways in a radial direction and on the substantially same tracks plural times.

### - Substrate -

The substrate for forming the optical recording medium of the invention is a substrate (corresponding to the denotation 16, for example, in Fig. 1, hereinafter, may be referred to as "first substrate") which is closer to a digital information recording layer, which will be described later, than the visible information recording layer. The substrate may be selected from various kinds of materials which are used as substrates for optical recording media.

Materials for the substrate include, for example, glass, and acrylic resins such as polycarbonate and polymethyl methacrylate; vinylchloride type resins such as polyvinylchloride and vinylchloride copolymer; epoxy resins, amorphous polyolefin, polyester and the like. If necessary, the materials may be used in combination. These materials may be used as a film-like substrate or a rigid substrate. Among these materials, polycarbonate is preferred in view of the moisture resistance, dimension stability and cost thereof.
The thickness of the first substrate is preferably 0.05 to 1.2 mm, and more preferably 0.1 to 1.1 mm.
Guide grooves for tracking, or micro-asperities (pre-groove) for representing information such as address signals are formed on the first substrate.

In the case of DVD-R or DVD-RW, it is preferable that the track pitch of the pre-grooves is in the range of from 300 to 900nm, more preferably from 350 to 850nm and further preferably from 400 to 800nm.

The depth of the pre-grooves (i.e., the groove depth) preferably is in the range of from 100 to 160 nm, more preferably in the range of from 120 to 150 nm and further preferably in the range of from 130 to 140 nm. Further, the groove width (i.e., half-value width) of the pre-grooves preferably is in the range of from 200 to 400 nm, more preferably in the range of 230 to 380 nm and further preferably in the range of from 250 to 350 nm.

Meanwhile, a substrate with grooves having a narrower track pitch as compared to those of conventional DVD-Rs and the like can be used in order to achieve even higher recording density. In this case, the track pitch of the grooves is preferably in the range of from 280 to 450 µm, more preferably in the range of from 300 to 420 nm and further preferably in the range of from 320 to 400 nm. Further, the depth of the grooves (i.e., groove depth) is preferably in the range of from 15 to 150 nm and still more preferably in the range of from 25 to 100 nm. Further, the groove width of the grooves is preferably in the range of from 50 to 250 nm and further preferably in the range of from 100 to 200 nm.

In the case of CD-Rs and the like, the track pitch of the grooves is preferably in the range of from 1.2 to 2.0 µm, more preferably in the range of from 1.4 to 1.8 µm, and still more preferable in the range of from 1.55 to 1.65 µm. The depth of the grooves (i.e., the groove depth) preferably is in the range of from 100 to 250 nm, more preferably in the range of from 150 to 230 nm and further preferably in the range of from 170 to 210 nm. The groove width of the pre-grooves preferably is in the range of from 400 to 650 nm, more preferably in the range of from 480 to 600 nm and still more preferably in the range of from 500 to 580 nm.

As described in the above, the visible information recording layer containing the dye compound represented by Formula (1) is suitably constituted for a visible information recording layer wherein the visible information recording layer is irradiated by a laser beam multiple times along substantially same track to record the visible information. Further, the visible information recording layer is preferably constituted such that when the visible information recording layer containing the dye compound represented by Formula (1) is irradiated by a laser beam multiple times overlappingly on the substantially same track to record the visible information, the laser beam is swayed in a radial direction to record the visible information. When a record is performed by irradiating a recording layer with laser beam multiple times overlappingly on the substantially same track to record the visible information, or when laser beam is swayed in a radial direction multiple times overlappingly on the substantially same track to record the visible information, an image with a high contrast and sharpness can be obtained, and an image light fastness is increased.

For the purpose of improving flatness, enhancing adhesiveness and preventing deterioration of the recording layer, an undercoat layer may be provided at the side (the surface side on which the groove is formed) where the digital information recording layer is disposed on the first substrate.

Examples of materials of the undercoat layer include polymer materials such as polymethyl methacrylate, acrylic acid/methacrylic acid copolymers, styrene/maleic anhydride copolymers, polyvinyl alcohol, N-methylol acrylamide, styrene/vinyltoluene copolymers, chlorosulfonated polyethylene, nitrocellulose, polyvinyl chloride, chlorinated polyolefin, polyester, polyimide, vinyl acetate/vinyl chloride copolymers, ethylene/vinyl acetate copolymers, polyethylene, polypropylene, and polycarbonate; and surface modifiers such as silane coupling agents.
The undercoat layer may be formed by dissolving or dispersing the materials in an appropriate solvent to prepare a coating liquid, and then coating the coating liquid on the surface of the substrate by known coating methods such as spin coating, dip coating, or extrusion coating.
The thickness of the undercoat layer is generally in the range of from 0.005 to 20 µm, preferably in the range of from 0.01 to 10 µm.

The optical recording medium of the invention may be appropriately constituted by providing other layers such as a digital information recording layer, a reflection layer, and an adhesive layer, and further a second substrate, in addition to the visible information recoding layer and the substrate (the first substrate).

In the optical recording medium of the invention, the constituent components of the visible information recording layer may be the same as or different from the constituent components (dyes or phase change recording materials) of a digital information recording layer, which will be described later, but, the characteristics required for the visible information recording layer and the characteristics required for the digital information recording layer are different from each other, and accordingly, the constituent components for each layer are preferably different from each other. More specifically, it is preferable that the constituent components of the digital information recording layer impart a superior recording and reproducing characteristic, and the constituent components of the visible information recording layer impart a high image contrast.

### - Digital Information Recording Layer -

The optical recording medium of the invention may be provided with the digital information recording layer for recording signal information (coded information) such as digital information including music data and the like together with the visible information recording layer. For example, the digital information recording layer may be provided, through a reflection layer which reflects light during recording, at the opposite side of the visible information recording layer.

The digital information recording layer is a layer which records and reproduces electronic information by means of laser beam used for recording and reproducing, and may be either a dye recording layer or a phase change type recording layer. However, a dye type recording layer containing a dye as a recording material is preferable.

Specific examples of the dyes contained in the dye type information recording layer include cyanine dyes, oxonol dyes, azo dyes, phthalocyanine dyes, triazole compounds (including benzotriazole compounds), triazine compounds, merocyanine compounds, aminobutadiene compounds, cinnamic acid compounds, benzoxazole compound, pyromethene compounds and squarylium compound. These compounds may have a metal atom at the coordinate center thereof. The dyes described in JP-A Nos. 4-74690, 8-127174, 11-53758, 11-334204, 11-334205, 11-334206, 11-334207, 2000-43423, 2000-108513, 2000-158818 and others may be used.

Among these dyes, (1) in the case where a CD-R or CD-RW (CD type) is formed by the optical recording medium of the invention, cyanine dyes, azo dyes and phthalocyanine dyes are preferably used; (2) in the case where a DVD-R or DVD-RW (DVD type) is formed, cyanine dyes, oxonol dyes, azo dyes (including Ni and Co complexes) and pyromethene compounds are preferably used, and (3) in the case where a Blu-ray disk is formed, cyanine dyes, oxonol dyes, azo dyes, phthalocyanine dyes, benzotriazole compounds and triazine compounds are preferably used. Furthermore, among the above, in particular, (2) in the case where a DVD type is formed, cyanine dyes, oxonol dyes or azo dyes (including Ni and Co complexes) are preferable, and (3) in the case where a Blu-ray disk is formed, cyanine dyes, oxonol dyes, azo dyes and phthalocyanine dyes are preferable.

In addition to the above, in the digital information recording layer, a binder and various kinds of additives such as an antioxidant, an ultraviolet absorber, a plasticizer, a lubricant and the like can be contained, in accordance with the intended use. Details of examples and amounts of the binder, and details of examples and amounts of the additives are the same as the descriptions in the visible information recording layer in the above.

The digital information recording layer may be formed, for example, by vapor deposition, sputtering, CVD, or solvent coating, in particular, the solvent coating is preferable. When the solvent coating is used, a coating liquid is prepared by dissolving a recording material such as a dye, if necessary, together with a quencher, a binder, and the like, in a solvent, and the coating liquid is coated on a substrate, and the resultant coated layer is dried to form the digital recording layer.

As the solvent for preparing the coating liquid, solvents similar to the solvents usable for preparing the coating liquid for forming the visible information recording layer, may be used. In this case, in view of the solubility of the dye, the solvents may be used singly, or two or more kinds in combination. Further, a binder and various kinds of additives such as an antioxidant, an ultraviolet absorber, a plasticizer, a lubricant and the like may be added to the coating solution in accordance with the intended use.

The concentration of the recording material in the coating liquid is generally in the range of from 0.01 to 15 % by mass, preferably 0.1 to 10 % by mass, more preferably 0.5 to 5 % by mass, and most preferably 0.5 to 3 % by mass.

The coating can be performed by the coating method similar to the coating method for forming the visible information recording layer. The digital information recording layer may be either a single layer or multiple layers. The thickness of the digital information recording layer is preferably in the range of from 10 to 500 nm, more preferably 15 to 300 nm and further more preferably 20 to 150 nm.

In the digital information recording layer, various kinds of anti-fading agents may be contained in order to enhance the light fastness. A singlet oxygen quencher is generally used as the anti-fading agent. Details of the singlet oxygen quencher are described in the above. The preferable content range of the anti-fading agent such as the singlet oxygen quencher is the same as the descriptions in the visible information layer in the above.

In the case where the digital information recording layer is a phase change type, the layer contains preferably an optical recording material comprising at least Ag, Al, In, Te, and Sb which can assume at least two states of a crystal state and an amorphous state. Such a layer may be formed by known methods. A known dielectric layer is preferably formed on this layer, if necessary.

### - Reflection Layer -

It is preferred that the reflection layer is formed for the purpose of improving reflectance during information reproduction at the inside adjacent to the digital information recording layer and/or the visible information recording layer.
Light-reflective materials as the materials for the reflection layer are preferably materials having a high reflectance to laser beam. Examples thereof include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi; stainless steel, and semiconductor materials. These materials may be used alone, in combination of two or more, or as an alloy. Among them, Cr, Ni, Pt, Cu, Ag, Au, Al and stainless steel are preferable. Metal Au, metal Ag, metal Al or alloys thereof are still more preferable, and Ag alloys (particularly Ag-Nd-Cu and Ag-Pd-Cu) are most preferable.
The reflection layer can be prepared, for example, by depositing, sputtering or ion plating the light-reflective substance on the substrate, digital information recording layer or visible information recording layer. The thickness of the reflection layer is generally in the range of from 10 to 300 nm and preferably in the range of from 50 to 200 nm.

### - Adhesive Layer -

When a laminated-type optical recording medium such as a DVD or the like is prepared, an adhesive layer can be formed by the process of adhering laminated bodies to each other, or a laminated body including a first substrate and a second substrate to each other. Materials for constituting an adhesive layer are preferably photocurable resins, in particular, resins having a low cure contraction rate, in light of preventing the warp of the disk.
Examples of such a photocurable resin include SD-640 and SD-661 manufactured by Dainippon Ink and Chemicals, Inc., and SK6100, SK6300, and SK6400 manufactured by Sony Chemicals Corp.
In order to impart the adhesive layer to elasticity, the thickness of the adhesive layer is in the range of from 1 to 100 µm, more preferably range in the range of from 5 to 60 µm, and particularly preferably in the range of from 20 to 55µm.

### - Protective Layer -

A protective layer may be provided, if necessary, in the optical recording medium of the invention, in order to prevent permeation of moisture or occurrence of scratches.
Examples of the materials used in the protective layer include preferably an ultraviolet ray curable resin, visible light curable resin, thermosetting resin, silicon dioxide and the like, and in particular, an ultraviolet ray curable resin is preferable. Examples of the ultraviolet ray curable resins include SD640 and the like manufactured by Dainippon Ink and Chemicals, Inc. SD-347 manufactured by Dainippon Ink and Chemicals, Inc., SD-694 manufactured by Dainippon Ink and Chemicals, Inc., SKCD1051 manufactured by SKC Co., and the like may also be used.
The thickness of the protective layer is preferably in the range of from 1 to 200 µm, more preferably in the range of from 50 to 150 µm.

### - Second Substrate -

In the laminated-type optical recording medium, a second substrate (may also be referred to as dummy substrate or protective substrate) is provided, through the visible information recording layer and the digital information recording layer and the like, in the face of the substrate (the first substrate) described in the above.

The second substrate of the invention is mainly a substrate disposed at a closer position to the visible information recording layer than the position to the digital information recording layer. As the materials, the same materials as those for the first substrate in the above can be used. It is not necessary to provide groove on the surface side on which the visible information recording layer is formed.

The thickness of the second substrate is preferably in the range of from 0.05 to 1.2 mm, more preferably in the range of from 0.05 to 1.1 mm, and still more preferably in the range of from 0.5 to 0.7 mm.

As described hereinafter, for example, a cover layer or a transparent sheet may be used as a second substrate in such a constitution that a digital information recording layer, a reflection layer, a visible information recording layer and a cover layer on the first substrate in this order from the substrate is used.

The cover layer is formed to prevent an interior of an optical recording medium from shock, and is not limited to a specific material as long as the material is transparent, but preferably, polycarbonate, cellulose triacetate and the like, and more preferably, a material having a hygroscopic rate at 23°C and 50% RH. Here, "transparent" means a degree of light transmittance of a material through which light for recording and reproducing can pass, preferably, 90% or higher.

The cover layer may be formed by coating a coating liquid prepared by dissolving a photocurable resin for forming the adhesive layer in an appropriate solvent on a recording layer at a predetermined temperature to form an adhesive film, and on the adhesive film, laminating a cellulose triacetate film (TAC film) formed by, for example, a plastic extrusion process, and curing the adhesive film by irradiating with light from the above of the laminated TAC film. The TAC film contains preferably an ultraviolet absorber.
The thickness of the cover layer is preferably in the range of from 0.01 to 0.2 mm, more preferably in the range of from 0.03 to 0.1 mm, and particularly preferably in the range of from 0.05 to 0.095 mm.

A transparent sheet may be provided, and a polycarbonate sheet and the like may be used as the transparent sheet. The thickness of the transparent sheet is also preferably in the range of from 0.01 to 0.2 mm, more preferably in the range of from 0.03 to 0.1 mm, and particularly preferably in the range of from 0.05 to 0.095 mm. In the case that an adhesive is applied on the surface on which the transparent sheet is laminated, the adhesive layer in the above is not required. In addition to the above, a light transmittable layer containing an ultraviolet ray curable resin and the like may be formed as the cover layer.

Further, a hard coat layer may be formed on the cover layer. The hard coat layer may be formed on a cover layer by means of coating or the like after the cover layer is laminated on a layer such as a reflection layer or a recording layer (including a visible information recording layer and a digital information recording layer) formed on a substrate. When a transparent sheet is used, before the transparent sheet is laminated on the recording layer, a hard coat layer is formed on the transparent sheet, and the transparent sheet is laminated on the recording layer such that the hard coat layer becomes the uppermost layer, so that the optical recording medium of the invention can be produced.

Next, the constitution of the optical recording medium of the invention is described in detail.
The constitution of the optical recording medium of the invention, firstly, a DVD type constitution (including a DVD-R, HD-DVD and the like) is exemplified. For example, a constitution, in which a first substrate formed a digital information recording layer thereon and a second substrate formed a visible information recording layer thereon are laminated to each other via an adhesive layer, is exemplified.

The second substrate, in addition to the substrate formed on the opposite side of the first substrate via the digital information recording layer, the visible information recording layer and the like, includes the cover layer and the transparent sheet, as described above. Accordingly, as another constitution of the optical recording medium of the invention, a CD type constitution (including a CD-R) is exemplified. This is a constitution in which a digital information recording layer, a visible information recording layer and a cover layer on a substrate in this order from the substrate (first substrate) are formed on the substrate. Further, the optical recording medium of the invention may be a constitution of a Blu-ray disk.

Fig. 1 shows an example a schematic cross-sectional view of a DVD type optical recording medium of the invention.
As shown in Fig. 1, the DVD type optical recording medium may have a constitution, for example, in which a first substrate 16, a digital information recording layer 18 formed on the first substrate 16, a first reflection layer 20 formed on the digital information recording layer 18, an adhesive layer 24 formed on the first reflection layer 20, a second reflection layer 24 formed on the adhesive layer 22, a visible information recording layer 14 formed on the second reflection layer 24, and a second substrate 26 formed on the visible information recording layer 14. In this case, for example, the first substrate 16 having the digital information recording layer 18 and the first reflection layer 20 formed thereon, and the second substrate 26 having the visible information recording layer 14 and the second reflection layer 22 formed thereon are laminated together via the adhesive layer 22 so as to face the respective reflection layers each other.

When digital information is recorded on the DVD type optical recording medium of the invention, or when recorded digital information is reproduced, the optical recording medium is irradiated by a laser beam having a prescribed wavelength (in the case of a DVD-R, from 650 to 670 nm, and in the case of HD DVD, from 400 to 410 nm) from the first substrate 16 side.

Further, when a visible image is recorded on the visible information recording layer 14, the layer is irradiated with a prescribed laser beam (for example, laser beam having a linear velocity of 3.5 m/s, wavelength of 660 nm, NA = 0.6, and 10 mW at the disk surface) from the second substrate 26 side to modify the irradiated portion with the irradiation to change the contrast so that a visually recognizable visible image can be formed. In this way, since an image can be formed by using laser beam, a desired image recording can easily performed on a label surface (visible information recording layer) of the optical recording medium by means of an optical recording medium drive without providing with a printer or the like, separately. Further, the recorded image has a high contrast and an excellent visibility, and a high light-fastness with a high fading resistance even if exposed to light over a long period of time.

When the optical recording medium is formed as a CD type, as the laminated structure shown in Fig. 1, the optical recording medium can be constituted such that a digital information recording layer 18 and a first reflection layer 20 are formed on a first substrate 16 in this order from the substrate 16 side, a protective layer is formed on the reflection layer 20 in place of the adhesive layer 22, a second reflection layer 24 and a visible information recording layer 14 are formed on the protective layer in this order, and a cover layer is formed on the visible information recording layer 14 in place of the second substrate 26. In this constitution, an image having a high contrast and superior visual recognition can also be recorded, and the recorded image has a high light-fastness.

When digital information is optically recorded on the CD type optical recording medium, or when recorded digital information is reproduced, the optical recording medium is irradiated by a laser beam having a prescribed wavelength (for example, wavelength of about 600 nm) from the first substrate 16 side.
Further, when a visible image is recorded on the visible information recording layer 14 of the CD type optical recording medium, the layer is irradiated with a prescribed laser beam as described above from the cover layer side to modify the irradiated portion with the irradiation to change the contrast so that a visually recognizable visible image can be formed. In this way, since an image can be formed by using laser beam, a desired image recording can easily performed on a label surface (visible information recording layer) of the optical recording medium by means of an optical recording medium drive without providing with a printer or the like, separately. Further, the recorded image has a high contrast and an excellent visibility, and a high light-fastness with a high fading resistance even if exposed to light over a long period of time.

Moreover, the layer constitution shown in Fig. 1 is an example. The order of the layer constitution may be not only the illustrated order in the drawing, but also another order in which the order of some of the layers is changed, and may be provided with other known layers. For example, the layer constitutions of the following (1) to (5) are exemplified:
(1) a first layer constitution is, for example, as shown in Fig. 1, a constitution such that a digital information recording layer 18, a first reflection layer 20, an adhesive layer 22 and a second reflection layer 24 are formed on a first substrate 16 in this order, and a visible information recording layer 14 and a second substrate 26 are formed on the second reflection layer 24;
(2) a second layer constitution is, not illustrated, a constitution such that a digital information recording layer 18, a first reflection layer 20 and an adhesive layer 22 are formed on a first substrate 16 in this order, and a visible information recording layer 14 and a second substrate 26 are formed on the adhesive layer 22;
(3) a third layer constitution is, not illustrated, a constitution such that a digital information recording layer 18, a first reflection layer 20, a protective layer and an adhesive layer 22 are formed on a first substrate 16 in this order, and a visible information recording layer 14 and a second substrate 26 are formed on the adhesive layer 22;
(4) a fourth layer constitution is, not illustrated, a constitution such that a digital information recording layer 18, a first reflection layer 20, a first protective layer, an adhesive layer 22 and a second protective layer are formed on a first substrate 16 in this order, and a visible information recording layer 14 and a second substrate 26 are formed on the second protective layer; and
(5) a fifth layer constitution is constitution such that a digital information recording layer 18, a first reflection layer 20, a first protective layer, layer an adhesive layer 22, a second protective and a second reflection layer 24 are formed on a first substrate 16 in this order, and a visible information recording layer 14 and a second substrate 26 are formed on the second reflection layer 24.
The layer constitutions of (1) to (5) in the above are exemplified, and the order of the layers in the layer constitution may be not only this order, but also another order in which the order of some of the layers is changed, and some of the layers may be omitted. Further, each layer may be formed by a single layer or plural layers.

The optical recording medium of the invention may be any one of a read only type, a write once type or a rewritable type, but a write once type is preferable. In the case of a write once type, the recording methods are not specifically limited to, but may be any one of a phase change type, magneto-optical type, dye type and the like, and the dye type is preferable as described above.

The method of producing the optical recording medium of the invention is described taking a DVD type optical recording medium as an example (see Fig. 1). That is, the optical recording medium is produced by the process in which a first layer-forming step for laminating, on one side of a first substrate 16, a digital information recording layer 18 and a first reflection layer 20 in this order from the substrate 16 side, and a second layer-forming step for laminating, on one side of a second substrate 26, a visible information recording layer 14 and a second reflection layer 24 in this order from the substrate 26, and a step for adhering the first substrate 16 and the second substrate 26 to each other such that the digital information recording layer 18 and the visible information recording layer 14 are positioned as the inside layers. In the first and second layer-forming steps, if necessary, a step for forming a protective layer may be provided. The reflection layer may not necessarily be provided. In the case of forming the optical recording medium in a form of a CD type, the medium can be prepared, on the first substrate 16, by laminating a digital recording layer, a visible information recording layer and a cover layer in this order from the substrate 16 side.

### - Recording Method -

In the optical recording medium of the invention, recording an image on the visible information recording layer, and recording a digital information on the digital information recording layer can be carried out by means of an optical medium recording drive (recording apparatus) having a recording function for the both layers. In this manner, when a single optical recording medium drive is used, after recording on either one layer of the visible information recording layer or the digital information recording layer has been made, the recording medium is turned over so that information can be recorded on the other recording layer. As the optical recording medium drive having a function for recording a visible image on the visible information recording layer, for example, one disclosed in JP-A Nos. 2003-203348, 2003-242750 and the like can be used.

Further, when a visible image is recorded on the visible information recording layer, the recording apparatus makes the optical recording medium and the laser pick up undergo relative movement with each other along the surface of the optical recording medium by tracking by a tracking groove formed in the visible information recording layer, and the laser beam is modulated in accordance with image data such as characters and pictures for forming an image in synchronization with the relative movement, and the visible information recording layer is irradiated with the laser beam to record an visible image. Such a constitution is described in JP-A No. 2002-203321 and the like.

In the invention, it is preferable recording method that an optical recording medium having a visible image recording layer containing the dye compound represented by Formula (1) on a circular disk-shaped substrate is used, and the visible information recording layer is irradiated by a laser beam multiple times along substantially same track by oscillating the beam in a radial direction to record visible information on the visible information recording layer. Since the recording by oscillating laser beam multiple times along substantially same track is conducted by the use of the optical recording medium of the invention, a visible image having a high contrast and an excellent light fastness can be obtained.

The recording apparatus for recording digital information on the visible information recording layer includes at least a laser pickup for emitting laser beam and a rotation mechanism for rotating an optical recording medium. Recording to and reproducing information from a digital information recording layer are carried out by irradiating laser beam from the laser pickup to the digital information recording layer in a state where the optical recoding medium is being rotated.

Next, the recording of information (digital information) to the digital information recording layer will be explained.
In the case that the digital information recording layer is a dye type, first, the laser beam is irradiated from the laser pickup to the digital information recording layer while an unrecorded optical recording medium is being rotated at a predetermined recording linear velocity. The dye in the recording layer absorbs the light of the irradiated beam to cause an increase in local temperature, so that desired pits are produced to change the optical property thereof, and information is recorded. Known objective lenses and laser devices can be used for the pickup.

In the meantime, the case where the digital information recording layer is a phase change type will be explained.
In the case of the phase change type, the layer is made of the above-described material, which can repeat the phase change between a crystalline phase and an amorphous phase due to irradiation of laser beam. When digital information is recorded, condensed laser pulses are irradiated to a phase change recording layer for a short period to melt the layer partially. The melted portions are cooled rapidly by thermal diffusion to be solidified, and recorded marks in an amorphous state are formed. Further, when being erased, the recorded mark portions are irradiated by a laser beam, and are heated to the temperature of the melting point or lower of the recording layer and the temperature of the crystallizing temperature or higher, and cooled slowly, thereby crystallizing the recorded marks in the amorphous state and returning the original unrecorded state.

### EXAMPLES

Hereinafter, the invention will be explained with reference to examples in further detail, but the invention is not limited to the following examples unless the invention exceeds its spirit. Further, in the examples, a DVD-R is prepared by laminating two disks, as a sample of the optical recording medium.

### (Example 1)

First, an polycarbonate resin is used as a raw material, a substrate (first substrate) having a thickness of 0.6 mm and an outer diameter of 120 mm with a spiral (helical) groove (depth; 130 nm, width; 300 nm, track pitch; 0.74µm) is formed by an injection molding.

Next, a coating solution was prepared by dissolving 1.0 g of the following dye (1) in 100 ml of 2, 2, 3, 3-tetrafluoro-1-propanol. The coating solution was coated on the surface having the groove of the substrate by a spin coating method to form a digital information recording layer having a layer thickness of 80 µm. Subsequently, a reflection layer having a layer thickness of 120 nm by sputtering Ag was formed on the digital information recording layer. Thereafter, on the reflection layer, an ultraviolet ray curable resin containing an acrylate-based monomer as a main component (SD318 manufactured by Dainippon Ink & Chemicals, Inc.) was coated on the reflection layer by a spin coating method, and cured by irradiating ultraviolet ray to form a protective layer having a layer thickness of 10 µm. In this way, a first laminated body was prepared.

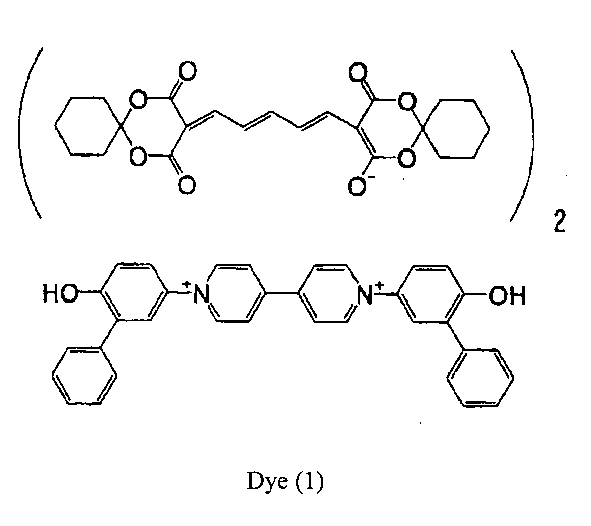

Next, a base disk made of glass was prepared. On the base disk made of glass, a photoresist was layered by a spin coating method, and baked. The photoresist was irradiated with beam corresponding to signals generated by a formatter by using a laser beam recorder, only within the area of 24 mm in radius, and developed. After development, nickel was sputtered thereon, and a stamper was formed by an electroforming method. The stamper has micro-asperity for forming prepits formed in the area of 21 mm to 24 mm in radius of the stamper, and a mirror surface state was in the area of the outside of 24 mm in radius.

And, using the stamper thus obtained, a substrate (second substrate) having a thickness of 0.6 mm was prepared by an injection molding. The depth, and the half width in the radial direction of the prepits formed by transferring the stamper were measured by using an atomic force microscope (AFM), and the values of 250 nm and 400 nm were obtained, respectively. In this case, the measurements were carried out three times, and the highest values and the lowest values obtained, respectively, were averaged to obtain these values as mean values.

Next, in order to obtain a visible information recording layer, a coating solution was prepared by dissolving, as dyes, 1.5g of the exemplary compound M-40 (dye compound represented by Formula (1)), and 1,5 g of the following dye (2) in 100 ml of 2, 2, 3, 3-tetrafluoro-1-propanol. The coating solution was coated on the prepit forming surface of the second substrate in the above by a spin coating method to form a visible information recording layer having a thickness of 100 µm. Subsequently, a reflection layer having a layer thickness of 70 nm by sputtering Ag was formed on the visible information recording layer. Thereafter, on the reflection layer, an ultraviolet ray curable resin containing an acrylate-based monomer as a main component (SD318 manufactured by Dainippon Ink & Chemicals, Inc.) was coated on the reflection layer by a spin coating method, and cured by irradiating ultraviolet ray to form a protective layer having a layer thickness of 10 µm. In this way, a second laminated body was prepared.

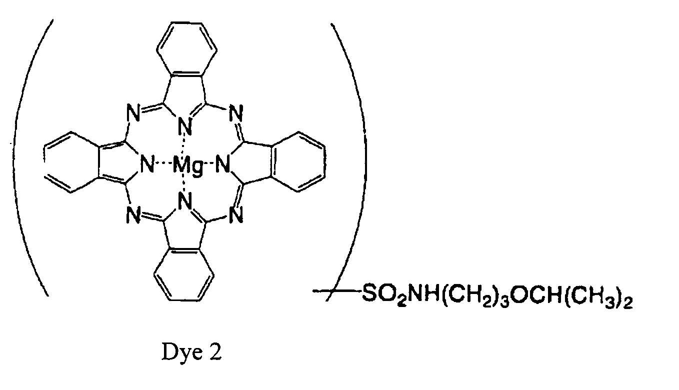

Next, on each of the protective layers of the first laminated body and the second laminated body thus obtained, an ultraviolet ray curable resin containing an epoxy resin as a main component (SK7000 manufactured by Sony Chemicals Corp.) was coated by a screen printing method, and irradiated with ultraviolet ray. Thereafter, the protective layers were pressed in a state where the protective layers were faced to each other to obtain an optical recording medium of the invention.

### (Examples 2 - 5)

Optical recording media of the invention were prepared in the similar manner to Example 1 except that the exemplary compound M-40 used as the dye for manufacturing the second substrate was replaced with the compounds listed in the following Table 1.

### (Comparative Example 1)

An comparative optical recording medium was prepared in the similar manner to Example 1 except that the exemplary compound M-40 used as the dye for manufacturing the second substrate was replaced with 1.5 g of Color Index Number SOLVENT RED 132.

### (Evaluation)

Recording was carried out for the optical recording media prepared in Examples and Comparative Example in the above, and evaluations were performed. The evaluation result is shown below.
As described in JP-A No. 2002-203321, a recording apparatus (a semiconductor laser with laser beam of 660 nm in wavelength was used) having a laser pickup which emits laser beam and a rotation mechanism for rotating an optical recording medium was used and recording was performed as follows.
While the optical recording medium and the laser pickup were relatively moved along the surface of the optical recording medium, the semiconductor laser beam is modulated in accordance with a desired image data in synchronization with the relative movement, the image information recording layer was irradiated with the laser beam in a focused state under the condition of a linear velocity of 3.5 m/s and a recording power of 8mW to record a visible image on the image information recording layer. Electronic information can be recorded on the digital information recording layer by being irradiated with the laser beam from the laser pickup in a state where the optical recording medium is rotated by the rotation mechanism.

### - 1. Light Fastness -

Using each of the optical recording media on which visible image was recorded, the density D° of an area where the visible information recording layer was not irradiated with the laser beam (non-image area) was measured by a spectrophotometer (manufactured by SHIMADZU CORPORATION). Subsequently, after the visible information recording layer side of each optical recording medium was irradiated with light using a xenon light irradiation apparatus (manufactured by Suga Tester Co., Ltd.), to be subjected to an aging treatment, the density D¹ after the aging treatment was measured in a similar manner to the above. From the densities thus obtained, remaining rates (%: = D¹/D⁰ x 100) were determined as indices for evaluation of the light fastness. The density is the density at the maximum absorbing wavelength of each dye.

### - 2. Contrast -

Using each optical recording medium on which the visible image was recorded, the density D² of the laser irradiated area was measured in the similar manner of the evaluation of the light fastness in the above. The difference in densities (D° - D²) from the thus obtained densities were determined as indices for evaluation of the contrast. The evaluation was made in accordance with the following criteria:
(Evaluation Criteria)
   A: 0.35 or higher;
   B: 0.34 to 0.25; and
   C: 0.24 or lower.

### - 3. Heat Resistance -

Using each optical recording medium on which the visible image was recorded, the density D³ of the area was not irradiated with the laser beam was measured after the optical recording medium was allowed to stand for 5 days in an incubator at 80°C in the similar manner of the evaluation of the light fastness in the above. From the densities thus obtained, remaining rates (%: = D³/D⁰ x 100) were determined as indices for evaluation of the heat resistance.

**(TABLE-1)**

| | Dye | Light Fastness (%) | Contrast | Heat Resistance (%) |
|---|---|---|---|---|
| Example 1 | Exemplary Compound M-40 + Dye (2) | 92 | A | 95 |
| Example 2 | Exemplary Compound M-50 + Dye (2) | 88 | A | 94 |
| Example 3 | Exemplary Compound M-20 + Dye (2) | 82 | A | 93 |
| Example 4 | Exemplary Compound T-8 + Dye (2) | 90 | A | 90 |
| Example 5 | Exemplary Compound T-52 + Dye (2) | 85 | A | 88 |
| Comparative Example 1 | Solvent Red 132 + Dye (2) | 50 | C | 45 |
| * The exemplary compounds in the column of dye in the Examples are the dye compounds represented by Formula (1) in the above. | | | | |

As shown in Table 1, in the Examples, images with a high contrast and sharpness were obtained and the light fastness and heat resistance of the recorded images were excellent. In contrast, in the Comparative Example, the contrast was insufficient, and the light fastness and heat resistance were inferior, and the image cannot be maintained in a good condition over a long period of time.

In the invention, in the cases where visible information recording layers are formed by the use of the other dye compounds represented by Formulae (1) - (3) other than the exemplary compounds in the Example, images with a high contrast, and excellent light fastness and heat resistance can be recorded.

### Explanation of Denotations

14: Visible information recording layer;
16: First substrate;
18: Digital information recording layer;
20: First reflection layer;
22: Adhesive layer;
24: Second reflection layer; and
26: Second substrate.

The disclosure of JP-A 2006-107828 is incorporated herein into this specification as a whole by reference.
All documents, patent applications and technical standards recited in this specification are incorporated herein by reference in this specification to the same extent as if each individual publication, patent application or technical standard was specifically and individually indicated to be incorporated by reference.

## Claims

1. An optical recording medium comprising, on a substrate, a visible information recording layer including a dye compound represented by Formula (1): 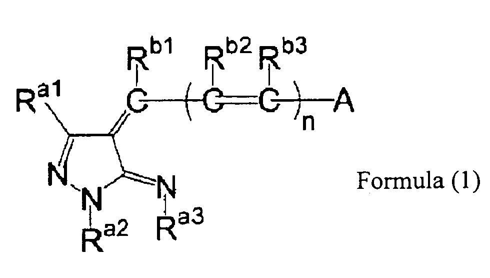 wherein R^{a1}, R^{a2}, R^{a3}, R^{b1}, R^{b2} and R^{b3} each independently represent a hydrogen atom or a monovalent substituent; R^{a2} and R^{a3} may be bonded to each other to form a 5-membered to 7-membered heterocyclic ring; A represents a substituted or unsubstituted aliphatic group, a substituted or unsubstituted aryl group, or a substituted or unsubstituted heterocyclic ring group; n represents 0, 1, 2 or 3; and when n is 2 or more, plural occurrences of R^{b2} may be the same or different and plural occurrences of R^{b3} may be the same or different.

2. The optical recording medium according to claim 1, wherein the dye compound is represented by Formula (2): 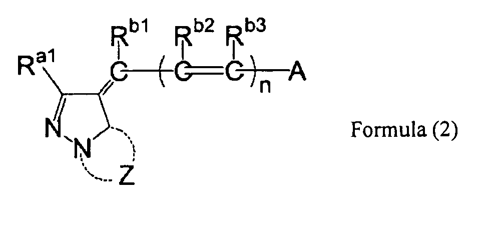 wherein R^{a1}, R^{b1}, R^{b2} and R^{b3} each independently represent a hydrogen atom or a monovalent substituent; A represents a substituted or unsubstituted aliphatic group, a substituted or unsubstituted aryl group, or a substituted or unsubstituted heterocyclic ring group; Z represents a group forming a 5-membered to 7-membered heterocyclic ring together with a nitrogen atom and carbon atom; n represents 0, 1, 2 or 3; and when n is 2 or more, plural occurrences of R^{b2} may be the same or different and plural occurrences of R^{b3} may be the same or different.

3. The optical recording medium according to claim 1 or 2, wherein the dye compound is represented by Formula (3): 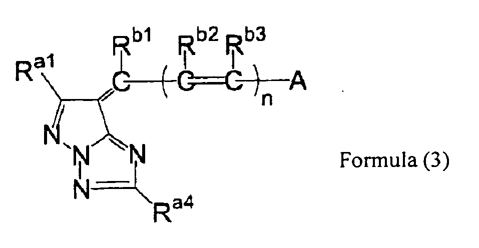 wherein R^{a1}, R^{a4}, R^{b1}, R^{b2} and R^{b3} each independently represent a hydrogen atom or a monovalent substituent; A represents a substituted or unsubstituted aliphatic group, a substituted or unsubstituted aryl group, or a substituted or unsubstituted heterocyclic ring group; n represents 0, 1, 2 or 3; and when n is 2 or more, plural occurrences of R^{b2} may be the same or different and plural occurrences of R^{b3} may be the same or different.

4. The optical recording medium according to claim 3, wherein R^{a4} in Formula (3) is an alkyl group or an aryl group.

5. An optical recording medium comprising a visible information recording layer on a substrate, wherein the visible information recording layer is irradiated by a laser beam multiple times on substantially the same track to record visible information, and includes a dye compound represented by Formula (1): 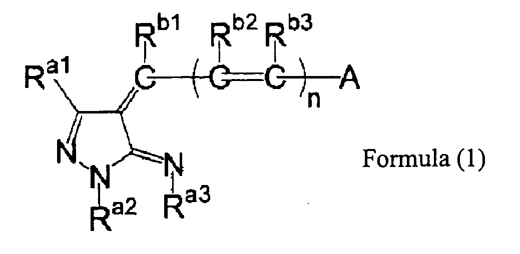 wherein R^{a1}, R^{a2}, R^{a3}, k^{b1}, R^{b2} and R^{b3} each independently represent a hydrogen atom or a monovalent substituent; R^{a2} and R^{a3} may be bonded to each other to form a 5-membered to 7-membered heterocyclic ring; A represents a substituted or unsubstituted aliphatic group, a substituted or unsubstituted aryl group, or a substituted or unsubstituted heterocyclic ring group; n represents 0, 1, 2 or 3; and when n is 2 or more, plural occurrences of R^{b2} may be the same or different and plural occurrences of R^{b3} may be the same or different.

6. An optical recording medium comprising a visible information recording layer on a disk-shaped substrate, wherein the visible information recording layer is irradiated by a laser beam by oscillating the laser beam multiple times along substantially the same track in a radial direction to record visible information, and includes a dye compound represented by Formula (1): 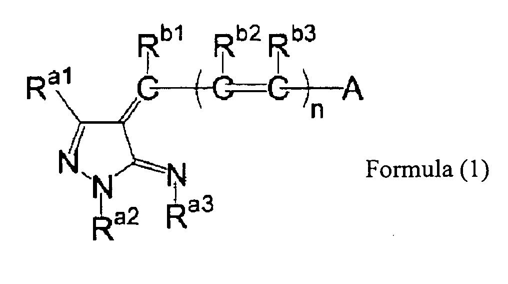 wherein R^{a1}, R^{a2}, R^{a3}, R^{b1}, R^{b2} and R^{b3} each independently represent a hydrogen atom or a monovalent substituent; R^{a2} and R^{a3} may be bonded to each other to form a 5-membered to 7-membered heterocyclic ring; A represents a substituted or unsubstituted aliphatic group, a substituted or unsubstituted aryl group, or a substituted or unsubstituted heterocyclic ring group; n represents 0, 1, 2 or 3; and when n is 2 or more, plural occurrences of R^{b2} may be the same or different and plural occurrences of R^{b3} may be the same or different.

7. A method of using a dye compound represented by the following Formula (1) in an optical recording medium comprising a visible information recording layer on a disk-shaped substrate, wherein the dye compound is used as a material for the visible information recording layer which is irradiated by a laser beam by oscillating the laser beam multiple times along substantially the same track in a radial direction to record visible information: 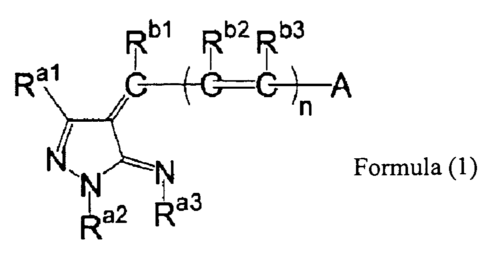 wherein R^{a1}, R^{a2}, R^{a3}, R^{b1}, R^{b2} and R^{b3} each independently represent a hydrogen atom or a monovalent substituent; R^{a2} and R^{a3} may be bonded to each other to form a 5-membered to 7-membered heterocyclic ring; A represents a substituted or unsubstituted aliphatic group, a substituted or unsubstituted aryl group, or a substituted or unsubstituted heterocyclic ring group; n represents 0, 1, 2 or 3; and when n is 2 or more, plural occurrences of R^{b2} may be the same or different and plural occurrences of R^{b3} may be the same or different.

8. A visible information recording method for recording visible information at a visible information recording layer using an optical recording medium having the visible information recording layer including a dye compound represented by the following Formula (1) on a disk-shaped substrate, wherein the visible information recording layer is irradiated by a laser beam by oscillating the laser beam in a radial direction multiple times along substantially the same track: 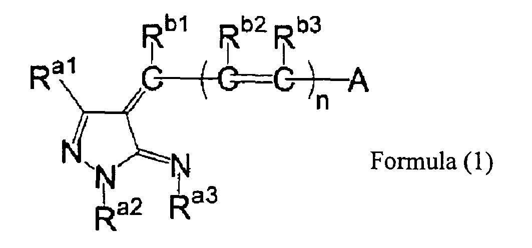 wherein R^{a1}, R^{a2}, R^{a3}, R^{b1}, R^{b2} and R^{b3} each independently represent a hydrogen atom or a monovalent substituent; R^{a2} and R^{a3} may be bonded to each other to form a 5-membered to 7-membered heterocyclic ring; A represents a substituted or unsubstituted aliphatic group, a substituted or unsubstituted aryl group, or a substituted or unsubstituted heterocyclic ring group; n represents 0, 1, 2 or 3; and when n is 2 or more, plural occurrences of R^{b2} may be the same or different and plural occurrences of R^{b3} may be the same or different.

9. The optical recording medium according to claim 1, wherein R^{a1} is an alkyl group having 1 to 12 carbon atoms.

10. The optical recording medium according to claim 1, wherein R^{a2} is an aliphatic group or an aryl group and R^{a3} is a hydrogen atom or an aliphatic group.

11. The optical recording medium according to claim 1, wherein R^{b1}, R^{b2} and R^{b3} each independently represent a hydrogen atom or an aliphatic group.

12. The optical recording medium according to claim 1, wherein A represents an alkyl group having 1 to 15 carbon atoms in total, an aryl group having 6 to 30 carbon atoms in total, or a 5-membered to 7-membered heterocyclic ring group having 2 to 20 carbon atoms in total.

13. The optical recording medium according to claim 3, wherein R^{a4} represents an aliphatic group, an aryl group, or a heterocyclic ring group.

14. The optical recording medium according to claim 3, wherein R^{a1} is an alkyl group having 1 to 8 carbon atoms, R^{a4} is an alkyl group or an aryl group, R^{b1}, R^{b2} and R^{b3} are hydrogen atoms, and n is 0 or 1.

15. The optical recording medium according to claim 3, wherein A is selected from groups represented by the following (A-1) to (A-14); 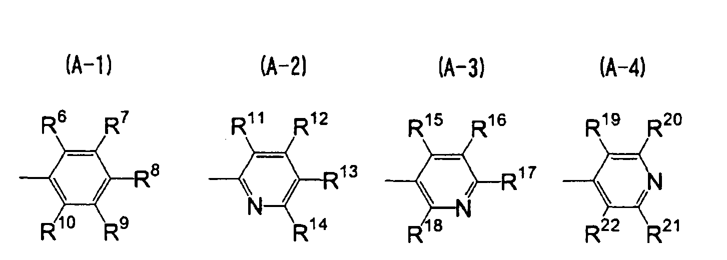 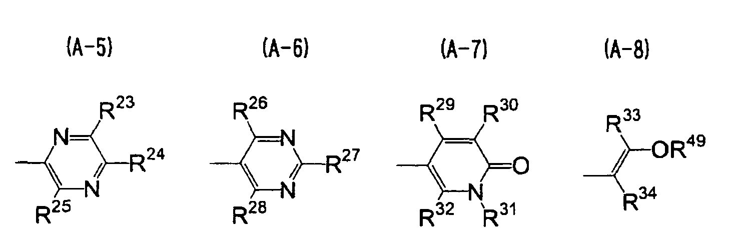 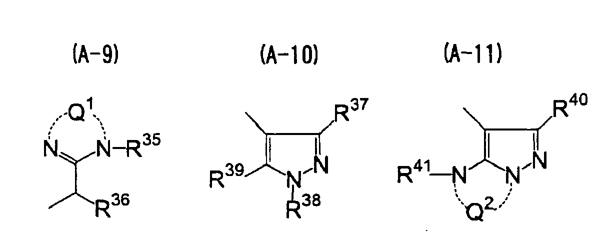 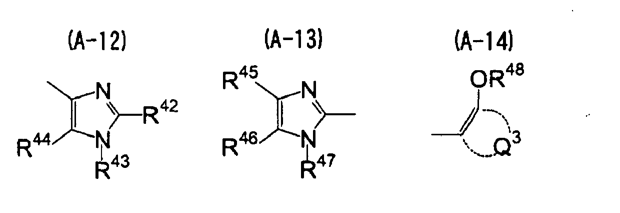 wherein in (A-1) to (A-14), R⁶ to R⁴⁹ each independently represent a hydrogen atom or a substituent; and Q¹ in (A-9), Q² in (A-11) and Q³ in (A-14) each independently represent a non-metal atomic group necessary for forming 5-membered to 7-membered rings.

16. The optical recording medium according to claim 3, wherein A is an azole ring and the azole ring represented by A has the same azole skeleton structure as a pyrazoline ring to which R^{a1} is bonded.

17. The optical recording medium according to claim 1, wherein the optical recording medium comprises the visible information recording layer, a digital information recording layer for recording coded information, and two substrates sandwiching both the visible information recording layer and the digital information recording layer therebetween.
